(19) Europäisches Patentamt / European Patent Office / Office européen des brevets

(11) EP 3 008 384 B1

(12) # FASCICULE DE BREVET EUROPEEN

(45) Date de publication et mention de la délivrance du brevet:
**29.11.2017 Bulletin 2017/48**

(21) Numéro de dépôt: **14734891.6**

(22) Date de dépôt: **12.06.2014**

(51) Int Cl.:
***F23C 10/00*** *(2006.01)* ***F23C 10/22*** *(2006.01)*
***F23C 10/26*** *(2006.01)*

(86) Numéro de dépôt international:
**PCT/FR2014/051434**

(87) Numéro de publication internationale:
**WO 2014/199091 (18.12.2014 Gazette 2014/51)**

(54) **PROCÉDÉ ET INSTALLATION DE COMBUSTION PAR OXYDO-RÉDUCTION EN BOUCLE CHIMIQUE D'UNE CHARGE HYDROCARBONÉE SOLIDE**

VERFAHREN UND ANLAGE ZUR VERBRENNUNG EINER FESTEN KOHLENWASSERSTOFFBESCHICKUNG MIT OXIDATIONSREDUKTION DURCH EINE CHEMISCHE SCHLEIFE

METHOD AND FACILITY FOR CHEMICAL-LOOP OXIDATION-REDUCTION COMBUSTION OF A SOLID HYDROCARBON FEEDSTOCK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2013 FR 1355481**

(43) Date de publication de la demande:
**20.04.2016 Bulletin 2016/16**

(73) Titulaires:
- **IFP Energies nouvelles**
  **92500 Rueil-Malmaison (FR)**
- **TOTAL RAFFINAGE CHIMIE**
  **92400 Courbevoie (FR)**

(72) Inventeurs:
- **GUILLOU, Florent**
  **F-69360 Ternay (FR)**
- **SOZINHO, Tiago**
  **F-69320 Lyon (FR)**
- **DREUX, Heloise**
  **F-69007 Lyon (FR)**
- **STAINTON, Hélène**
  **F-75018 Paris (FR)**

(56) Documents cités:
**WO-A2-2008/095984**
**WO-A2-2013/079817**
**FR-A1- 2 960 940**
**FR-A1- 2 980 258**
**US-B1- 6 709 636**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 008 384 B1

Printed by Jouve, 75001 PARIS (FR)

## Description

### Domaine de l'invention

La présente invention concerne le domaine de la combustion de charges hydrocarbonées par oxydo-réduction en boucle chimique (CLC) opérant en lit fluidisé, et plus particulièrement la combustion en boucle chimique opérant en lit fluidisé de charges hydrocarbonées solides.

### Contexte général

Dans la suite du texte, on entend par procédé CLC (Chemical Looping Combustion) un procédé d'oxydo-réduction en boucle sur masse active. Il convient de noter que, de manière générale, les termes oxydation et réduction sont utilisés en relation avec l'état respectivement oxydé ou réduit de la masse active. Le réacteur d'oxydation, aussi appelé réacteur air, est celui dans lequel la masse oxydo-réductrice est oxydée et le réacteur de réduction, aussi appelé réacteur de combustion ou réacteur fuel, est le réacteur dans lequel la masse oxydo-réductrice est réduite.

Le procédé CLC permet de produire de l'énergie à partir de combustibles hydrocarbonés tout en facilitant la capture du dioxyde de carbone émis lors de la combustion.

Le procédé CLC consiste à mettre en oeuvre des réactions d'oxydo-réduction d'une masse active, typiquement un oxyde métallique, pour décomposer la réaction de combustion en deux réactions successives. Une première réaction d'oxydation de la masse active, avec de l'air ou un gaz jouant le rôle de comburant, permet d'oxyder la masse active. Une seconde réaction de réduction de la masse active ainsi oxydée à l'aide d'un gaz réducteur permet ensuite d'obtenir une masse active réutilisable ainsi qu'un mélange gazeux comprenant essentiellement du dioxyde de carbone et de l'eau, voire du gaz de synthèse contenant de l'hydrogène et du monoxyde de carbone. Cette technique permet donc d'isoler le dioxyde de carbone ou le gaz de synthèse dans un mélange gazeux pratiquement dépourvu d'oxygène et d'azote.

La combustion étant globalement exothermique, il est possible de produire de l'énergie à partir de ce procédé, par exemple sous la forme de vapeur ou d'électricité, en disposant des surfaces d'échange dans la boucle de circulation de la masse active ou sur les effluents gazeux en aval des réactions de combustion ou d'oxydation.

Il est également possible d'envisager avec un tel procédé CLC la production de gaz de synthèse, voire d'hydrogène, en contrôlant la combustion et en mettant en oeuvre les purifications requises en aval du procédé de combustion.

Le brevet US 5 447 024 décrit par exemple un procédé de combustion en boucle chimique comprenant un premier réacteur de réduction d'une masse active à l'aide d'un gaz réducteur et un second réacteur d'oxydation permettant de restaurer la masse active dans son état oxydé par une réaction d'oxydation avec de l'air humide. La technologie du lit fluidisé circulant est utilisée pour permettre le passage continu de la masse active de son état oxydé à son état réduit.

La masse active, passant alternativement de sa forme oxydée à sa forme réduite et inversement, décrit un cycle d'oxydo-réduction. Elle joue un rôle de transporteur d'oxygène, en cédant son oxygène dans une zone de réduction (réacteur de réduction) dans les conditions opératoires appropriées, et en étant ensuite transportée vers une zone d'oxydation (réacteur d'oxydation) dans laquelle elle est réoxydée au contact d'un gaz oxydant (tel que par exemple l'air ou la vapeur d'eau).

Ainsi, dans le réacteur de réduction, la masse active ($M_xO_y$) est tout d'abord réduite à l'état $M_xO_{y-2n-m/2}$, par l'intermédiaire d'un hydrocarbure $C_nH_m$, qui est corrélativement oxydé en $CO_2$ et $H_2O$, selon la réaction (1), ou éventuellement en mélange CO + $H_2$ selon les proportions utilisées.

$$C_nH_m + M_xO_y \Rightarrow n\ CO_2 + m/2\ H_2O + M_xO_{y-2n-m/2} \qquad (1)$$

Dans le réacteur d'oxydation, la masse active est restaurée à son état oxydé ($M_xO_y$) au contact de l'air selon la réaction (2), avant de retourner vers le premier réacteur.

$$M_xO_{y-2n-m/2} + (n+m/4)\ O_2 \Rightarrow M_xO_y \qquad (2)$$

Dans les équations ci-dessus, M représente un métal.

Les zones réactionnelles permettant la mise en oeuvre des réactions de combustion en boucle chimique sont généralement constituées de lits fluidisés ou de lits fluidisés circulants, aussi appelés lits transportés.

La combustion de charges hydrocarbonées solides telles que le charbon provoque des problèmes d'encrassement de l’installation CLC.

Un problème majeur pouvant survenir lors de la combustion de charges hydrocarbonées solides réside dans le phénomène de collage du combustible solide injecté dans l’installation CLC, notamment au niveau de l’injecteur permettant l’introduction de la charge dans le réacteur de combustion. Dans le cas par exemple d’une injection gravitaire de charbon dans un lit fluidisé, la chaleur importante développée dans l’injecteur, par conduction avec le lit à haute température du réacteur de combustion, peut conduire au collage du charbon broyé et entrainer l’obstruction de l’injecteur. Une conséquence directe d’une telle obstruction est un arrêt de l’unité CLC et la réalisation d’une opération de maintenance. Ce phénomène d’encrassement par collage de la charge est d’autant plus important que la part de matière volatile est importante dans la charge, comme c’est par exemple le cas de la biomasse.

Un autre problème est constitué par la formation de cendres dans la zone réactionnelle de combustion, et plus particulièrement la formation de cendres de foyer agglomérées dont l’accumulation peut "encrasser" le réacteur. Ce phénomène nuit à la bonne opération du procédé CLC et peut nécessiter l’arrêt complet de l’installation pour maintenance. Les cendres de foyer agglomérées constituent une spécificité de la combustion de charges hydrocarbonées solides, comme le charbon. En effet, les combustibles solides ont des teneurs en matières minérales non négligeables et une fois la combustion du carbone et de l’hydrogène effectuée, des résidus solides appelés cendres se forment. Le tableau 1 rassemble les analyses de deux charbons A et B à titre d’exemple. On constate que la teneur en cendres des charbons varie selon l’origine de la charge solide, mais que cette teneur est non négligeable. Elle représente typiquement de 5 à 20% de la masse de charbon sec. Certains combustibles solides tel le pet coke contiennent des teneurs en cendres beaucoup plus faibles. Il existe également des combustibles solides plus chargés en cendres.

Tableau 1 : Analyse de différents charbons

| | | - | **Charbon A** | **Charbon B** |
|---|---|---|---|---|
| **Analyse charbon Sec** | Cendres | *% pds* | 10,3 | 14,8 |
| | matières volatiles | *% pds* | 37,6 | 24 |
| | Soufre | *% pds* | 0,5 | 0,57 |
| | chaleur spécifique | *Kcal/kg* | 6710 | 6630 |
| | | | | |
| **Analyse ultime** | C | *% pds* | 71,1 | 73,46 |
| | H | *% pds* | 4,77 | 3,87 |
| | N | *% pds* | 1,41 | 1,65 |
| | S | *% pds* | 0,5 | 0,57 |
| | Cendres | *% pds* | 10,3 | 14,76 |
| | O *(par différence)* | *% pds* | 11,92 | 5,69 |
| | | | | |
| **Composition des cendres** | $SiO_2$ | *% pds* | 67 | 49,84 |
| | $Al_2O_3$ | *% pds* | 19,2 | 40,78 |
| | $Fe_2O_3$ | *% pds* | 5,2 | 2,9 |
| | CaO | *% pds* | 2 | 1,08 |
| | MgO | *% pds* | 1,2 | 0,26 |
| | $TiO_2$ | *% pds* | 0,9 | 1,96 |
| | $K_2O$ | *% pds* | 1,7 | 0,64 |
| | $Na_2O$ | *% pds* | 1,7 | 0,06 |
| | $SO_3$ | *% pds* | 0,9 | 0,52 |
| | $P_2O_5$ | *% pds* | 0,2 | 1,05 |

Les cendres résultant de la combustion du charbon sont constituées de fines particules résiduelles. Leur température de fusion varie en fonction de leur composition et est généralement comprise entre 1000 et 1500°C. Cependant, à des températures inférieures, par exemple entre 800 et 1000°C, il est possible d'observer un phénomène d'agglomération des particules de cendres qui deviennent collantes. Elles peuvent donc soit s'agglomérer entre elles, soit s'agglomérer avec les particules de matériau transporteur d'oxygène. Compte tenu des conditions de mise en oeuvre dans la combustion en boucle chimique, on distingue alors deux types de cendres:

- ◦ les cendres volantes: elles correspondent aux cendres qui sont transportées dans le réacteur fuel par les gaz de combustion. Les cendres volantes représentent généralement de 50 à 99% des cendres formées (typiquement de 70 à 90%). Leur granulométrie est relativement fine avec en général au moins 25% de fines de taille inférieure à 10 microns et 90% de fines de taille inférieure à 100 microns. Le diamètre de Sauter moyen représentatif de la granulométrie des cendres volantes est en général compris entre 5 et 30 microns, typiquement voisin de 10 microns. La masse volumique de grain de ces cendres est en général comprise entre 2000 et 3000 kg/$m^3$, généralement voisine de 2500 kg/$m^3$.
- ◦ les cendres agglomérées: elles correspondent aux cendres qui s'agglomèrent entre elles ou avec le matériau transporteur d'oxygène et qui sont trop lourdes pour être transportées dans le réacteur fuel par les gaz de combustion. Ces cendres sont parfois appelées cendres de lit ou cendres de foyer agglomérées. Dans la présente description, ce type de cendres agglomérées sera désigné par l'expression "cendres de foyer agglomérées". La granulométrie des cendres agglomérées est plus délicate à estimer et dépend des conditions de mise en oeuvre du procédé. De manière générale, on estime que ces cendres ont une granulométrie supérieure à 100 microns et leur taille peut aller jusqu'à plusieurs millimètres.

Les cendres de foyers agglomérées forment donc des objets denses de plus grande taille que les particules du transporteur d'oxygène, qui présentent des propriétés de fluidisation pouvant évoluer et être différentes de celles du transporteur d'oxygène. Ces objets peuvent alors ne plus être fluidisés en même temps que le lit transporté et vont s'accumuler au fond du réacteur de combustion.

Pour les cendres qui restent fluidisables dans les conditions opératoires, des dispositifs spécifiques permettant leur élimination ont été proposés, tels que décrits dans le brevet français FR2850156, ou les demandes de brevet français FR2960940 et FR2960941. Cependant ces dispositifs ne fonctionnent que pour les fines produites par attrition du matériau transporteur d'oxygène (par effet de vieillissement chimique ou mécanique), les particules de combustible solide imbrûlées ("imbrûlés") et les cendres volantes.

Un dispositif spécifique est nécessaire pour évacuer les solides agglomérés. On a en général recours à une vanne de fond ouverte sur le lit fluidisé et/ou à une vis sans fin alimentée directement depuis le lit fluidisé pour évacuer la partie basse du lit fluidisé contenant les cendres de foyer agglomérées que l'on souhaite évacuer. Bien que ces moyens simples fournissent une solution au problème de l'accumulation des cendres de foyer agglomérées, ils ne sont en rien sélectifs et l'on aura tendance à extraire plus de transporteur d'oxygène (majoritaire dans le lit fluidisé) que de cendres proprement dites.

Un dispositif amélioré est décrit dans la demande de brevet FR2980258. Ce document présente une installation CLC dans laquelle une zone de sédimentation des cendres agglomérées située en fond du réacteur de combustion comprend par exemple une vis sans fin refroidie permettant de soutirer un flux de particules comprenant des cendres agglomérées. Cependant, ce dispositif ne permet pas une extraction satisfaisante des cendres de foyer agglomérées, ces dernières représentant une proportion faible du flux de particules soutiré.

Extraire de manière non sélective ou faiblement sélective les cendres de foyer agglomérées peut, à long terme, nuire aux performances de procédé et alourdir les coûts d'exploitation. Les particules du transporteur d'oxygène involontairement extraites peuvent en effet représenter une part non négligeable de l'inventaire qu'il faudra compenser soit par l'apport de transporteur d'oxygène neuf, soit par recyclage du transporteur d'oxygène que l'on aura séparé des cendres après refroidissement et criblage, i.e. par un recyclage externe.

**Objectifs et résumé de l'invention**

La présente invention a pour objectif de surmonter, au moins en partie, les problèmes mentionnés ci-dessus liés à la combustion en boucle chimique (CLC) spécifique de charges hydrocarbonées solides.

La présente invention vise notamment à satisfaire les objectifs suivants:

- d'une manière générale, fournir un procédé et une installation CLC permettant de limiter les problèmes d'encrassement de l'installation CLC, et ainsi réduire les opérations de maintenance qui y sont liées ;
- fournir un procédé et une installation CLC permettant de limiter le phénomène de collage de charges hydrocarbonées solides au niveau du système d'injection de la charge, et d'éviter une obstruction dudit système d'injection ;
- fournir un procédé et une installation CLC permettant d'évacuer la population granulométrique non désirée constituée par les cendres de foyer agglomérées, tout en limitant la perte de masse active oxydo-réductrice lors de cette

évacuation ;

- fournir un procédé et une installation CLC permettant de limiter les appoints d'inventaire, c'est-à-dire les appoints en masse oxydo-réductrice, lors du fonctionnement de l'unité CLC, que ce soit des appoints en masse oxydo-réductrice neuve (première introduction dans l'installation CLC) ou des appoints en masse oxydo-réductrice issue d'un recyclage externe, par exemple issue d'une séparation de la masse déjà utilisée dans l'installation CLC et séparée d'autres particules telles que des cendres après refroidissement et criblage ;

Ainsi, pour atteindre au moins l'un des objectifs susvisés, parmi d'autres, la présente invention propose, selon un premier aspect, un procédé de combustion d'une charge hydrocarbonée solide par oxydo-réduction en boucle chimique dans laquelle circule une masse active oxydo-réductrice sous forme de particules, dans lequel:

- on introduit la charge hydrocarbonée solide sous forme de particules dans une zone de transport opérant en lit fluidisé et débouchant dans un réacteur de combustion ;
- on injecte dans ladite zone de transport un premier gaz de fluidisation de manière à créer une phase diluée du lit fluidisé, en contrôlant le débit dudit gaz tel que la vitesse superficielle du gaz dans la zone de transport soit supérieure à la vitesse terminale de chute des particules de la charge hydrocarbonée solide et à la vitesse terminale de chute de particules solides situées dans le réacteur de combustion, et en contrôlant la température dudit premier gaz tel que la température dans la phase diluée de la zone de transport soit inférieure ou égale à 500°C ;
- on effectue la combustion de la charge hydrocarbonée solide issue de la zone de transport par mise en contact avec la masse active oxydo-réductrice au sein du réacteur de combustion opérant en lit fluidisé.

Selon un mode de réalisation, la vitesse superficielle du gaz dans la phase diluée de la zone de transport est comprise entre 2 m/s et 50 m/s, plus préférentiellement entre 2 m/s et 35 m/s, encore plus préférentiellement entre 2 m/s et 20 m/s, et plus préférentiellement encore entre 3 m/s et 10 m/s.

Selon un mode de réalisation, on introduit la charge hydrocarbonée solide sous forme de particules dans la zone de transport par écoulement gravitaire au moyen d'une conduite à écoulement gravitaire et on régule l'écoulement de la charge hydrocarbonée solide à l'aide de moyens de régulation et d'étanchéité situés entre la conduite à écoulement gravitaire et une zone tampon pour le stockage temporaire de la charge hydrocarbonée solide sous forme de particules.

Selon un mode de réalisation, on introduit la charge hydrocarbonée solide sous forme de particules dans la zone de transport au moyen d'une vis sans fin, la vis sans fin étant alimentée par un écoulement gravitaire de la charge solide en provenance d'une zone tampon pour le stockage temporaire de la charge hydrocarbonée solide sous forme de particules, et on régule l'écoulement de la charge hydrocarbonée solide à l'aide de moyens de régulation et d'étanchéité situés entre la vis sans fin et la zone tampon.

Selon un mode de réalisation, on introduit la charge hydrocarbonée solide sous forme de particules dans la zone de transport au moyen d'une ligne de transport pneumatique dense, la ligne de transport pneumatique dense étant alimentée par un écoulement gravitaire de la charge solide en provenance d'une zone tampon pour le stockage temporaire de la charge hydrocarbonée solide sous forme de particules et par un gaz vecteur, de préférence de même nature que le premier gaz de fluidisation, et on régule l'écoulement de la charge hydrocarbonée solide à l'aide de moyens de régulation et d'étanchéité situés entre la ligne de transport pneumatique dense et la zone tampon.

Selon un mode de réalisation, on envoie une charge hydrocarbonée solide brute depuis une zone de stockage vers un broyeur pour former la charge hydrocarbonée sous forme de particules, le débit de ladite charge hydrocarbonée solide brute étant régulé par des moyens de régulation et d'étanchéité situés entre le broyeur et la zone de stockage, puis on introduit la charge hydrocarbonée sous forme de particules dans la zone de transport au moyen d'une conduite alimentée par le broyeur dans lequel on envoie un gaz vecteur pour transporter la charge vers la conduite

Selon un mode de réalisation, on réalise les étapes suivantes :

- on extrait du réacteur de combustion un mélange comprenant des particules de la masse active oxydo-réductrice et des cendres de foyer par une conduite d'extraction située en fond du réacteur de combustion ;
- on introduit le mélange selon un débit contrôlé dans une zone de séparation constituée par une partie inférieure de la zone de transport, située sous une partie supérieure de la zone de transport dans laquelle la charge hydrocarbonée solide est introduite ;
- on injecte un deuxième gaz de fluidisation dans la zone de séparation, l'injection se faisant en contrôlant le débit dudit deuxième gaz de fluidisation de manière :

    ◦ à séparer par élutriation les particules de la masse active oxydo-réductrice et les cendres de foyer agglomérées au sein dudit mélange, les particules de la masse active oxydo-réductrice étant alors transportées vers le réacteur de combustion et les cendres de foyer agglomérées tombant sous l'effet de la gravité au fond de la zone de séparation d'où elles sont évacuées; et

◦ à ce que la vitesse du gaz issu du mélange du premier gaz de fluidisation et du deuxième gaz de fluidisation dans la partie supérieure de la zone de transport soit supérieure à la vitesse terminale de chute des particules de la charge hydrocarbonée solide et à la vitesse terminale de chute de particules solides situées dans le réacteur de combustion;

et ladite injection se faisant en contrôlant également la température du deuxième gaz tel que la température de la zone de transport soit inférieure ou égale à 500°C.

Selon un mode de réalisation, la vitesse superficielle du deuxième gaz de fluidisation dans la zone de séparation est fixée à une valeur comprise entre 30 % et 300 % de la vitesse terminale de chute moyenne des cendres de foyer agglomérées.

De manière préférée, la vitesse superficielle du gaz issu du mélange du gaz de fluidisation et du deuxième gaz de fluidisation dans la partie supérieure de la zone de transport est comprise entre 0,7 m/s et 50 m/s.

Selon un mode de réalisation, on contrôle le débit du mélange envoyé dans la zone de séparation de manière à ce que la fraction volumique de l'ensemble des particules de ladite masse active oxydo-réductrice et des cendres de foyer agglomérées soit inférieure à 5% dans la partie inférieure de la zone de transport.

Selon un mode de réalisation, on contrôle le débit du mélange envoyé dans la zone de séparation avec une vanne en L ou une vis sans fin.

Selon un mode de réalisation, on injecte un troisième gaz de fluidisation dans le réacteur de combustion de même nature que le premier gaz de fluidisation et/ou le deuxième gaz de fluidisation injectés dans la zone de séparation.

Selon un mode de réalisation, on injecte un quatrième gaz de fluidisation dans la conduite d'extraction lors de l'extraction du mélange comprenant les particules de la masse active oxydo-réductrice et les cendres de foyer agglomérées.

Selon un mode de réalisation, on introduit le mélange dans la zone de séparation à l'aide de moyens d'injection pour améliorer la dispersion des particules de la masse active oxydo-réductrice et les cendres de foyer agglomérées du mélange sur l'ensemble de la section de la zone de séparation.

Selon un mode de réalisation, on injecte, au sein de la zone de séparation, le deuxième gaz de fluidisation à une première altitude et on introduit le mélange à une deuxième altitude, la première altitude étant inférieure à la deuxième altitude, et la différence entre les première et deuxième altitudes étant supérieure à un diamètre équivalent de la zone de séparation.

Selon un mode de réalisation, la zone de transport est une conduite sensiblement verticale.

Selon un mode de réalisation, la zone de transport est une conduite sensiblement verticale comprenant une partie supérieure et une partie inférieure de sections différentes.

De préférence, la charge hydrocarbonée solide est choisie parmi le charbon, le coke, le pet-coke, la biomasse, les sables bitumineux et les déchets ménagers, agricoles ou industriels.

Selon un mode de réalisation, la masse active oxydo-réductrice réduite dans le réacteur de combustion est réoxydée dans un réacteur d'oxydation, avant d'être à nouveau mise en contact avec la charge hydrocarbonée solide dans le réacteur de combustion.

Selon un deuxième aspect, l'invention propose une installation de combustion d'une charge hydrocarbonée solide par oxydo-réduction en boucle chimique pour mettre en oeuvre le procédé selon l'invention, comprenant un réacteur de combustion et un réacteur d'oxydation, le réacteur de combustion comprenant :

- une alimentation en masse active oxydo-réductrice sous forme de particules ;
- une alimentation en un troisième gaz de fluidisation ; et
- une alimentation en une charge hydrocarbonée solide sous forme de particules, l'alimentation en une charge hydrocarbonée solide comprenant:

◦ une zone de transport opérant en lit fluidisé, pour transporter la charge hydrocarbonée solide vers le réacteur de combustion, ladite zone de transport ayant une température inférieure ou égale à 500°C;
◦ des moyens d'injection de la charge hydrocarbonée solide sous forme de particules dans la zone de transport ; et
◦ des moyens d'injection d'un premier d'un premier gaz de fluidisation dans la une zone de transport,

et le réacteur d'oxydation comprenant :

- une alimentation en particules de masse active oxydo-réductrice réduite dans le réacteur de combustion,
- une alimentation en un gaz oxydant,
- une évacuation pour le gaz oxydant réduit suite à l'oxydation de la masse active oxydo-réductrice, et
- une évacuation pour les particules de la masse active oxydo-réductrice réoxydée vers le réacteur de combustion.

Selon un mode de réalisation, les moyens d'injection de la charge hydrocarbonée solide dans la zone de transport comprennent une conduite à écoulement gravitaire débouchant dans la zone de transport, ladite conduite étant alimentée par une zone tampon via des moyens de régulation et d'étanchéité permettant de réguler l'écoulement de la charge solide.

Selon un mode de réalisation, les moyens d'injection de la charge hydrocarbonée solide dans la zone de transport comprennent une vis sans fin débouchant dans la zone de transport, la vis sans fin étant alimentée par une zone tampon via des moyens de régulation et d'étanchéité permettant de réguler l'écoulement de la charge solide.

Selon un mode de réalisation, les moyens d'injection de la charge hydrocarbonée solide dans la zone de transport comprennent une ligne de transport pneumatique dense débouchant dans la zone de transport, la ligne de transport comprenant des moyens d'injection d'un gaz vecteur pour transporter les particules de la charge hydrocarbonée solide s'écoulant depuis une zone tampon vers la zone de transport, l'écoulement des particules de la charge hydrocarbonée solide depuis la zone tampon jusqu'à la ligne de transport étant régulé par des moyens de régulation et d'étanchéité.

Selon un mode de réalisation, les moyens d'injection de la charge hydrocarbonée solide dans la zone de transport comprennent

- une zone de stockage d'une charge hydrocarbonée solide brute;
- un broyeur pour broyer la charge hydrocarbonée solide brute issue de la zone de stockage sous forme de particules aptes à être fluidisées dans la zone de transport, ledit broyeur comprenant des moyens d'injection d'un gaz vecteur ;
- une conduite recevant un mélange du gaz vecteur et des particules de la charge hydrocarbonée solide provenant du broyeur, et débouchant dans la zone de transport.

Selon un mode de réalisation, l'installation comprend en outre :

- une conduite d'extraction d'un mélange comprenant des particules de la masse active oxydo-réductrice et des cendres de foyer agglomérées contenues dans le réacteur de combustion, ladite conduite d'extraction étant positionnée en fond dudit réacteur ;
- une zone de séparation constituée par une partie inférieure de la zone de transport, pour séparer par élutriation les particules du mélange provenant de la conduite d'extraction, la zone de séparation comprenant :
    - une alimentation en mélange provenant de la conduite d'extraction, l'alimentation comprenant des moyens de contrôle du débit du mélange introduit dans la zone de séparation, et comprenant éventuellement des moyens d'injection du mélange pour améliorer la dispersion dudit mélange dans la zone de séparation ;
    - des moyens d'injection d'un deuxième gaz de fluidisation ;
    - une zone en phase diluée du lit fluidisé en partie supérieure de la zone de séparation ; et
- une évacuation pour les cendres de foyer agglomérées située en partie inférieure de la zone de séparation.

Selon un mode de réalisation, les moyens d'injection du deuxième gaz de fluidisation dans la zone de séparation comprennent un système d'injection multiple.

Selon un mode de réalisation, les moyens d'injection du deuxième gaz de fluidisation dans la zone de séparation sont situés à une première altitude et l'alimentation du mélange dans la zone de séparation est située à une deuxième altitude supérieure à la première altitude, la différence entre les première et deuxième altitudes étant supérieure à un diamètre équivalent de la zone de séparation.

Selon un mode de réalisation, les moyens de contrôle du débit du mélange introduit dans la zone de séparation sont constitués par une vanne en L ou une vis sans fin.

Selon un mode de réalisation, la conduite d'extraction du mélange de particules de la masse active oxydo-réductrice et de cendres de foyer agglomérées comprend une alimentation en un quatrième gaz de fluidisation.

Selon un mode de réalisation, l'évacuation pour les cendres de foyer agglomérées comprend des moyens de contrôle du flux de cendres agglomérées évacuées.

Selon un mode de réalisation, la zone de séparation est une conduite sensiblement verticale.

Selon un mode de réalisation, l'installation comprend en outre un réacteur d'oxydation muni d'une alimentation en particules de masse active oxydo-réductrice réduite dans le réacteur de combustion, d'une alimentation en un gaz oxydant, d'une évacuation pour le gaz oxydant réduit suite à l'oxydation de la masse active oxydo-réductrice, et une évacuation pour les particules de la masse active oxydo-réductrice réoxydée vers le réacteur de combustion.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

Les figures 1 à 5 sont des schémas illustrant la mise en oeuvre du procédé CLC selon différents modes de réalisation de l'invention.

La figure 5 illustre en particulier un mode de réalisation de l'invention dans lesquels en plus d'injecter la charge hydrocarbonée solide de manière à limiter tout phénomène de collage de la charge, on évacue les cendres de foyer agglomérées de l'installation CLC.

Sur les figures, les mêmes références désignent des éléments identiques ou analogues.

**Description de l'invention**

Terminologie

Par cendres de foyer agglomérées, on entend, dans la présente description, les cendres formées lors de la combustion de la charge hydrocarbonée solide, qui se sont agglomérées entre elles ou avec d'autres particules de solide telles que les particules de la masse active oxydo-réductrice ou des imbrûlés. Les cendres de foyer agglomérées constituent une population de particules solides non fluidisables dans les conditions du procédé, que l'on cherche à évacuer du réacteur de combustion.

Par lit fluidisé dense, on entend un lit fluidisé dans lequel la fraction de gaz $\varepsilon_g$ est inférieure à 0,9, de préférence inférieure à 0,8. Par lit fluidisé dilué, on entend un lit fluidisé dans lequel la fraction volumique des particules de la masse active oxydo-réductrice est inférieure à 10% en volume.

Par vitesse superficielle d'un gaz, on entend le rapport entre le débit volumique de gaz aux conditions passant dans la section ($m^3/s$) du réacteur et la section du réacteur ($m^2$).

Dans la présente invention, les expressions "matériau transporteur d'oxygène" et "masse active oxydo-réductrice" sont équivalentes. La masse oxydo-réductrice est dite active en rapport avec ses capacités réactives, dans le sens où elle est apte à jouer son rôle de transporteur d'oxygène dans le procédé CLC en captant et relarguant de l'oxygène. La masse active oxydo-réductrice peut subir une phase d'activation de manière à augmenter ses capacités réactives pouvant consister en une phase de montée en température, de préférence progressive, et de préférence sous atmosphère oxydante (par exemple sous air). Cette phase d'activation peut par exemple être réalisée dans l'installation CLC, en particulier en introduisant les particules de la masse oxydo-réductrice au moment du démarrage du procédé, avant que soient initiés les cycles d'oxydo-réduction avec l'introduction de combustible dans le procédé.

Par charge hydrocarbonée solide "brute", on entend une charge qui n'est pas conditionnée de manière à être fluidisée dans les conditions opératoires du procédé CLC, en particulier d'un point de vue de sa granulométrie. La charge brute est généralement sous forme de particules grossières, dont le diamètre est typiquement compris entre 5 mm et 60 mm. Une telle charge brute peut être humide. L'expression charge brute, en relation avec la charge hydrocarbonée solide, est à opposer à l'expression charge conditionnée dans la présente description.

La présente invention concerne un procédé de combustion d'une charge hydrocarbonée solide par oxydo-réduction en boucle chimique dans laquelle circule une masse active oxydo-réductrice sous forme de particules (procédé CLC), dans lequel on propose d'injecter la charge hydrocarbonée solide de manière à limiter tout phénomène de collage de la charge sur les parois du dispositif d'injection.

La charge hydrocarbonée solide peut par exemple être du charbon, du coke, du pet-coke, de la biomasse, prétraitée ou non, des sables bitumineux ou des déchets ménagers, agricoles ou industriels.

La figure 1 représente un mode de réalisation du procédé CLC et de l'installation CLC selon l'invention. Pour plus de simplicité, seule la partie de l'installation CLC nécessaire pour la description de la présente invention est représentée. Ainsi, le réacteur d'oxydation dans lequel la masse active est oxydée pour être envoyée dans le réacteur de combustion 110 et former une boucle chimique n'apparait pas dans le schéma de la figure, tout comme la partie supérieure du réacteur de combustion.

Dans le procédé selon l'invention, on effectue la combustion de la charge hydrocarbonée solide sous forme de particules par mise en contact avec la masse active oxydo-réductrice au sein du réacteur de combustion 110, lequel opère en lit fluidisé. Lors de cette combustion la masse active oxydo-réductrice est réduite. Le lit est fluidisé par un gaz de fluidisation 103, introduit par exemple au moyen d'un interne de fluidisation 111 tel qu'une couronne. La masse active oxydo-réductrice, jouant le rôle de transporteur d'oxygène, peut être injectée directement dans le réacteur de combustion 110 par une alimentation 102, en provenance du réacteur d'oxydation. La masse active oxydo-réductrice est généralement l'espèce majoritaire dans le réacteur de combustion 110. Elle se présente sous la forme de particules fuidisables, appartenant aux groupes A, B ou C de la classification de Geldart. De préférence, les particules de la masse active

oxydo-réductrice appartiennent au groupe B de la classification de Geldart. De manière préférée, la masse active oxydo-réductrice a une granulométrie telle que plus de 90 % des particules ont une taille comprise entre 100 μm et 500 μm, de préférence comprise entre 150 μm et 300 μm, pour une densité comprise entre 1 000 kg/$m^3$ et 5 000 kg/$m^3$ et préférentiellement entre 1 500 kg/$m^3$ et 4 000 kg/$m^3$.

La masse oxydo-réductrice peut être composée d'oxydes métalliques, tels que par exemple des oxydes de Fe, Ti, Ni, Cu, Mn, Co, V, seuls ou en mélange, pouvant provenir de minerais (par exemple l'ilménite ou la pyrolusite) ou être synthétiques (par exemple des particules d'oxyde de nickel supportées sur alumine $NiO/NiAl_2O_4$), avec ou sans liant, et présente les propriétés d'oxydo-réduction requises et les caractéristiques nécessaires à la mise en oeuvre de la fluidisation. La capacité de stockage en oxygène de la masse oxydo-réductrice est avantageusement comprise, suivant le type de matériau, entre 1 % et 15 % poids. Avantageusement, la quantité d'oxygène effectivement transférée par l'oxyde métallique est comprise entre 1 et 2 % poids, ce qui permet de n'utiliser qu'une fraction de la capacité de transfert d'oxygène, idéalement moins de 30 % de celle ci afin de limiter les risques de vieillissement mécanique ou d'agglomération des particules.

Le gaz de fluidisation 103 est introduit de tel façon qu'à la température du procédé, comprise entre 800 °C et 1 200 °C (température dans le réacteur de combustion et le réacteur d'oxydation), la vitesse superficielle du gaz soit sensiblement supérieure à la vitesse minimale de fluidisation $u_{MF}$ des particules de la masse active oxydo-réductrice, généralement plus de 3 à 5 fois supérieure à $u_{MF}$, La vitesse minimale de fluidisation, $u_{MF}$, se produit lorsque la force de traction exercée par le déplacement vers le haut du gaz est égale au poids des particules (Fluidization Engineering, Kunii et Levenspiel, 1991). La vitesse minimale de fluidisation dépend de la densité et de la granulométrie du solide et de la viscosité et de la densité du gaz. A titre d'exemple, pour un solide ayant un diamètre de 200 μm et une densité égale à 3250 kg/$m^3$ à 900 °C sous air, la vitesse minimale de fluidisation $u_{MF}$ est de 1.7 cm/s.

Pour la combustion de la charge solide, il est préférable de broyer celle-ci la plus finement possible, ce qui permet de favoriser sa fluidisation, ainsi que de favoriser sa réaction rapide avec les réactifs en présence. La finesse de broyage augmente sensiblement la surface exposée aux réactifs. La charge hydrocarbonée solide qui alimentée le réacteur de combustion a donc été de préférence broyée à un diamètre moyen inférieur à 1 mm, préférentiellement inférieur à 500 μm et encore plus préférentiellement inférieur à 100 μm.

Le réacteur de combustion 110 comprend une alimentation en charge hydrocarbonée solide sous forme de particules, cette alimentation comprenant une zone de transport opérant en lit fluidisé 140 pour transporter la charge hydrocarbonée solide vers le réacteur de combustion 110, des moyens d'injection de la charge hydrocarbonée solide sous forme de particules 160 dans la zone de transport 140, et des moyens d'injection d'un premier d'un gaz de fluidisation 106 dans la une zone de transport.

On injecte la charge hydrocarbonée solide sous forme de particules dans la zone de transport 140 opérant en lit fluidisé et débouchant dans le réacteur de combustion 110.

On introduit dans cette zone de transport 140 le gaz de fluidisation 106 de manière à créer une phase diluée du lit fluidisé. Cette étape est réalisée d'une part en contrôlant le débit du gaz 106 tel que la vitesse superficielle du gaz dans la zone de transport 140 soit supérieure à la vitesse terminale de chute des particules de la charge hydrocarbonée solide et à la vitesse terminale de chute de particules solides situées dans le réacteur de combustion 110, et d'autre part en contrôlant la température du gaz 106 tel que la température (dans la phase diluée) de la zone de transport 140 soit à inférieure ou égale à 500 °C, de préférence inférieure ou égale à 450 °C, plus préférentiellement inférieure ou égale à 400 °C, et plus préférentiellement encore inférieure ou égale à 300 °C. De cette manière, on limite le phénomène de collage et d'agglomération de la charge hydrocarbonée sur les parois du dispositif d'alimentation en charge hydrocarbonée solide de l'installation CLC. La température de la zone de transport est de préférence déterminée selon le type de charge solide injectée.

De préférence, la vitesse superficielle du gaz dans la zone de transport est comprise entre 2 m/s et 50 m/s, plus préférentiellement entre 2 m/s et 35 m/s, encore plus préférentiellement entre 2 m/s et 20 m/s, et plus préférentiellement encore entre 3 m/s et 10 m/s.

La charge hydrocarbonée solide est ensuite envoyée dans le réacteur de combustion 110 pour réaliser la combustion de celle-ci par mise en contact avec la masse active oxydo-réductrice.

Le gaz de fluidisation 106 est préférentiellement choisi pour être compatible avec le procédé, et encore plus préférentiellement, il est de même nature que le gaz de fluidisation 103 du réacteur de combustion 110. De manière préférée, on choisi un gaz qui limite l'apparition de coke, par exemple du $CO_2$ ou de la vapeur d'eau De manière plus préférée on utilise de la vapeur d'eau en tant que gaz de fluidisation.

Les moyens d'injection de la charge hydrocarbonée solide 160 peuvent comprendre différents dispositifs décrits en relation avec les figures 2 à 4, par exemple une simple conduite à écoulement gravitaire tel que représenté dans la figure 1, une conduite où la charge est transportée de façon pneumatique, ou un dispositif de convoyage mécanique tel qu'un sas ou une vis sans fin.

Dans la mise en oeuvre du procédé représentée à la figure 1, l'introduction de la charge hydrocarbonée dans la zone de transport est effectués par écoulement gravitaire au moyen d'une conduite à écoulement gravitaire 170. On

régule l'écoulement de la charge hydrocarbonée solide à l'aide de moyens de régulation et d'étanchéité 180 situés entre la conduite à écoulement gravitaire 170 et une zone tampon 190 pour le stockage temporaire de la charge hydrocarbonée solide sous forme de particules. Les moyens de régulation et d'étanchéité 180 peuvent être par exemple une écluse rotative. Un avantage de cette configuration réside dans sa simplicité de mise en oeuvre.

Une vanne de fond 150 n'a pas vocation à être ouverte en continu mais vise à l'évacuation des matières qui peuvent ne pas être transportées, elles sont alors évacuées de façon gravitaire dans la partie inférieure de la zone de transport 540. Elle peut être, de façon non limitative, de type pelle ou casse croute.

La figure 2 illustre un autre mode de réalisation de l'invention, dans lequel le procédé CLC, identique à celui décrit en rapport avec la figure 1, comprend l'introduction de la charge hydrocarbonée solide sous forme de particules dans la zone de transport 240 au moyen d'une vis sans fin 270. La vis sans fin 270 est alimentée par un écoulement gravitaire de la charge solide 281 en provenance d'une zone tampon 290 permettant le stockage temporaire de la charge hydrocarbonée solide sous forme de particules. On régule l'écoulement de la charge hydrocarbonée solide à l'aide de moyens de régulation et d'étanchéité 280 situés entre la vis sans fin 270 et la zone tampon 290. Les moyens de régulation et d'étanchéité 280 peuvent être par exemple une écluse rotative.

La vis tournant à une vitesse contrôlée va permettre un contrôle fin, c'est-à-dire précis, de l'alimentation en particules solides de la charge hydrocarbonée vers la zone de transport 240.

Les moyens d'injection de la charge hydrocarbonée solide dans la zone de transport de l'installation CLC selon cette configuration comprennent donc la vis sans fin 270 débouchant dans la zone de transport 240, cette vis sans fin étant alimentée par la zone tampon 290 via des moyens de régulation et d'étanchéité 280 permettant de réguler l'écoulement de la charge solide.

La figure 3 illustre encore un autre mode de réalisation de l'invention, dans lequel le procédé CLC, identique à celui décrit en rapport avec la figure 2, comprend l'introduction de la charge hydrocarbonée solide sous forme de particules dans la zone de transport 340 au moyen d'une ligne de transport pneumatique dense 370. Cette ligne de transport 370 est alimentée d'une part par un écoulement gravitaire de la charge solide 381 en provenance d'une zone tampon 390 pour le stockage temporaire de la charge hydrocarbonée solide sous forme de particules ,et d'autre part par un gaz vecteur 307, de préférence de même nature que le premier gaz de fluidisation 306. On régule l'écoulement de la charge hydrocarbonée solide à l'aide de moyens de régulation et d'étanchéité 380 situés entre la ligne de transport pneumatique dense 370 et la zone tampon 390. Les moyens de régulation et d'étanchéité 380 peuvent être une écluse rotative.

Cette configuration permet notamment d'assurer un régularité de l'écoulement de la charge hydrocarbonée avec une mise en oeuvre de moyens à coûts limités.

L'installation CLC selon cette configuration comporte des moyens d'injection de la charge hydrocarbonée solide dans la zone de transport 340 comprenant une ligne de transport pneumatique dense 370. Cette dernière débouche dans la zone de transport 340, et comprend des moyens d'injection du gaz vecteur 307 pour transporter les particules de la charge hydrocarbonée solide s'écoulant depuis la zone tampon 390 vers la zone de transport 370, l'écoulement des particules de la charge hydrocarbonée solide depuis la zone tampon 390 jusqu'à la ligne de transport 370 étant régulé par les moyens de régulation et d'étanchéité 380.

La figure 4 représente un autre mode de réalisation de l'invention, dans lequel le procédé CLC, identique à celui décrit en rapport avec la figure 2, comprend l'envoi d'une charge hydrocarbonée solide brute depuis une zone de stockage 492 vers un broyeur 470 pour former la charge hydrocarbonée sous forme de particules. Le débit de la charge hydrocarbonée solide brute est régulé par des moyens de régulation et d'étanchéité 480 situés entre le broyeur 470 et la zone de stockage 492. On introduit ensuite la charge hydrocarbonée sous forme de particules dans la zone de transport 440 au moyen d'une conduite 482 alimentée par le broyeur dans lequel on envoie un gaz vecteur 408 pour transporter la charge vers la conduite 482.

Dans cette configuration, la charge hydrocarbonée est un solide brut broyé en amont de du dispositif et envoyé en prise directe dans le dispositif d'alimentation en charge hydrocarbonée du réacteur de combustion.

Il n'y a pas de capacité tampon de la charge hydrocarbonée conditionnée pour la combustion en boucle chimique. La charge est un combustible solide brut, potentiellement encore humide, dont le calibre, en général compris entre 5 mm et 60 mm, ne permet pas de le fluidiser.

Les moyens de régulation de la charge hydrocarbonée brute peuvent être, à titre d'exemple, une écluse rotative ou une trémie doseuse si le calibre de la charge ne permet pas l'utilisation de l'écluse rotative.

Le broyeur, outre sa fonction de mise en forme des particules (granulométrie) de la charge hydrocarbonée pour leur fluidisation dans les conditions opératoires du procédé CLC, pourra, si besoin, ajuster l'humidité apparente de la charge pour la rendre compatible avec le transport pneumatique. La technologie du broyeur pourra être, par exemple, à boulet, pendulaire ou à roue. Il sera préférentiellement à boulet ou pendulaire.

Le gaz vecteur 408 est de préférence compatible avec la combustion en boucle chimique, et encore plus préférentiellement de même nature que le gaz vecteur 406.

Il est possible, grâce à cette configuration où l'injection de la charge est réalisée de manière indirecte par

l'intermédiaire de la zone de transport plutôt que directement dans le réacteur de combustion, de ne pas impacter le fonctionnement du broyeur en adaptant le débit du gaz vecteur 408 à son fonctionnement optimal. Cette configuration à également l'avantage de permettre de contrôler indépendamment le temps de séjour des solides dans la zone de transport 440 par l'ajustement du débit de gaz de fluidisation 406.

Du point de vue de l'installation CLC, les moyens d'injection de la charge hydrocarbonée solide dans la zone de transport selon cette configuration comprennent donc :

- la zone de stockage 492 de la charge hydrocarbonée solide brute;
- le broyeur 470 pour broyer la charge hydrocarbonée solide brute issue de la zone de stockage 492 sous forme de particules aptes à être fluidisées dans la zone de transport 440, le broyeur comprenant des moyens d'injection du gaz vecteur 408;
    - une conduite recevant un mélange du gaz vecteur et des particules de la charge hydrocarbonée solide provenant du broyeur 470, et débouchant dans la zone de transport 440.

Dans le procédé selon l'invention, la masse active oxydo-réductrice réduite dans le réacteur de combustion est réoxydée dans un réacteur d'oxydation, avant d'être à nouveau mise en contact avec la charge hydrocarbonée solide dans le réacteur de combustion.

Avantageusement, le procédé selon l'invention comprend en outre une élimination des cendres de foyer agglomérées, l'accumulation de ces dernières contribuant à encrasser le réacteur de combustion, tout en permettant de limiter les pertes en masse active oxydo-réductrice lors de cette élimination des cendres. La figure 5 représente un mode de réalisation particulier de l'invention dans lesquels une telle élimination des cendres de foyer agglomérées est mise en oeuvre.

Parmi les avantages liés à la combinaison de l'injection de la charge hydrocarbonée telle que décrite ci-dessus et de l'élimination des cendres de foyer particulière détaillée ci-dessous, on peut citer l'effet synergique de nettoyage de la zone de transport dans laquelle sont injectées les particules de la charge hydrocarbonée solide, et qui pourraient néanmoins subir un phénomène de collage malgré les précautions apportées, ce nettoyage étant réalisé par un effet abrasif du flux de particules de la masse active oxydo-réductrice transportées vers le réacteur de combustion. La combinaison de l'injection de la charge hydrocarbonée et de l'élimination des cendres de foyer selon l'invention permet également de préchauffer avantageusement la charge hydrocarbonée solide au contact de la masse active oxydo-réductrice chaude recyclée transportée dans la zone de séparation vers le réacteur de combustion.

La figure 5 illustre un mode de réalisation de l'invention dans lequel on procède à l'élimination d'une population granulométrique non désirée située dans le réacteur de combustion constituée par les cendres de foyer agglomérées.

La combustion de la charge hydrocarbonée solide dans le lit fluidisé peut amener, par la réduction de la masse active oxydo-réductrice, le frittage, ou l'agglomération des cendres à la formation d'objets non fluidisables dans les conditions du procédé. Leur accumulation peut nuire à la bonne opération du précédé et peut conduire à des arrêts pour maintenance plus fréquents, requérant ce faisant l'arrêt complet de l'unité.

Cette élimination des cendres de foyer agglomérées est réalisée de manière à limiter les pertes en masse active oxydo-réductrice soutirées du réacteur de combustion en même temps que les cendres agglomérées.

Afin d'éliminer ces objets, que l'on englobera sous la dénomination cendres de foyer agglomérées, on extrait du réacteur de combustion 510 un mélange comprenant des particules de ladite masse active oxydo-réductrice et des cendres de foyer agglomérées par une conduite d'extraction 520 située en fond du réacteur de combustion 510. Le mélange extrait peut comprendre du gaz présent dans le réacteur de combustion qui est entrainé avec le solide, et qui correspond au espaces inter-granulaires des particules (masse active et cendres). L'écoulement peut être facilité par l'injection d'un gaz de fluidisation 504 dans la conduite d'extraction 520, qui comprend alors des moyens d'injection d'un tel gaz. Le mélange comprenant les particules solides s'écoule jusqu'à des moyens de contrôle de la circulation du mélange 530.

Ces moyens de contrôle 530 du débit du mélange de particules solides peut être une vanne mécanique, une vanne pneumatique de type vanne en L, vanne en V ou vanne en J, ou un convoyeur entraîné mécaniquement tel qu'une vis sans fin. Ces moyens de contrôle permettent avantageusement d'adapter l'extraction des cendres de foyer agglomérées à la vitesse de formation de celles-ci, et par conséquent de limiter plus généralement a consommation énergétique du procédé.

On introduit ensuite le mélange de particules selon un débit contrôlé dans une zone de séparation constituée par une partie inférieure 541 de la zone de transport 540, située sous une partie supérieure 542 de la zone de transport 540 dans laquelle la charge hydrocarbonée solide est introduite.

Le passage des moyens de contrôle du débit du mélange 530 à la zone de séparation 541 peut se faire au moyen d'un dispositif d'injection ou d'un interne (non représentés), pour améliorer la dispersion des particules solides du mélange sur l'ensemble de la section de la zone de séparation 541.

De préférence, le débit du mélange de particules solides contrôlé par les moyens de contrôle 530 est ajusté de manière à ce que la fraction volumique des particules dans le courant gazeux soit généralement comprise entre 1 % et 5 %, de préférence comprise entre 1 % et 2 % dans la phase diluée de la zone de séparation 541.

La zone de séparation 541 est avantageusement une conduite, de préférence sensiblement verticale.

La zone de séparation 541 comprend, outre l'alimentation en mélange de particules solides comportant les moyens de contrôle 530 et éventuellement les moyens d'injection dispersifs du mélange, une alimentation en un gaz de fluidisation 505, choisi pour être compatible avec les réactions et les applications du réacteur 510.

On injecte le gaz de fluidisation 505 dans la zone de séparation de manière à créer une phase diluée du lit fluidisé. Cette zone en phase diluée se situe en partie supérieure de la zone de séparation 541, et se prolonge par la partie supérieure 542 de la zone de transport, elle-même débouchant dans le réacteur de combustion 510. On contrôle la vitesse superficielle du gaz dans la phase diluée de ladite zone de séparation de manière à séparer par élutriation les particules de la masse active oxydo-réductrice et les cendres de foyer agglomérées au sein du mélange. Les particules de la masse active oxydo-réductrice sont alors transportées vers la partie supérieure 542 de la zone de transport 540, et les cendres de foyer agglomérées tombent sous l'effet de la gravité au fond de la zone de séparation 541 d'où elles sont évacuées.

L'injection de gaz 505 peut être multiple (non représenté). L'injection de gaz 505 peut se faire au travers d'un interne de distribution (non représenté). L'injection du gaz peut se faire à la paroi.

Le gaz injecté 505 105 est choisi pour ne pas impacter la réaction ayant lieu dans le réacteur 510. Le gaz injecté 505 est préférentiellement de même nature que le gaz de fluidisation 503 injecté dans le réacteur 510. Ce gaz est par exemple choisi parmi l'air, l'azote, la vapeur d'eau ou le $CO_2$..

De préférence, l'injection du gaz 505 se fait à une altitude inférieure à celle de l'alimentation du mélange de particules solides. La différence d'altitude d'injection est préférentiellement supérieure au diamètre de la zone de séparation 541, ou un diamètre équivalent si la zone de séparation 541 ne présente pas de section circulaire. Le diamètre équivalent correspond dans ce cas au diamètre d'une conduite de section circulaire dont la section a la même surface que la section développée par la zone de section non circulaire.

La vitesse superficielle du gaz dans la phase diluée de la zone de séparation 541 est fixée à une valeur généralement comprise entre 30 % et 300 % de la vitesse terminale de chute moyenne des cendres de foyer agglomérées, de préférence comprise entre 75 % et 125 %.

La vitesse terminale de chute se calcule de la façon suivante (Fluidization Engineering, Butterworth-Heinemann, Daizo Kunii, Octave Levenspiel, p80) :

$$V_t = \sqrt{\frac{4.d_p.(\rho_s - \rho_g).g}{3.\rho_g.C_D}} \qquad (3)$$

Avec:

- $d_p$ le diamètre moyen des particules;
- $\rho_s$ la masse volumique des particules (kg/m$^3$);
- $\rho_g$ la masse volumique des particules (kg/m$^3$); et
- $C_D$ le coefficient de traînée

La vitesse superficielle du gaz dans la phase diluée de la zone de séparation 541 peut être contrôlée en ajustant le débit du gaz de fluidisation 505 injecté dans la zone de séparation 541 pour une configuration de la zone de séparation donnée.

La vitesse du gaz de fluidisation 505 est de préférence réglée de manière à transporter vers le réacteur les particules de la masse active oxydo-réductrice dont la taille est inférieure à 500 $\mu$m, de préférence inférieure à 300 $\mu$m. La vitesse superficielle du gaz dans la phase diluée de la zone de séparation 541 est de préférence supérieure à 11 fois la vitesse minimum de fluidisation de la masse active oxydo-réductrice, afin que la majorité des particules de la masse active soient transportées vers le réacteur.

De préférence, la vitesse superficielle du gaz dans la phase diluée de la zone de séparation 541 est comprise entre 0,7 m/s et 50 m/s, de préférence entre 0,7 m/s et 35 m/s, plus préférentiellement entre 0,7 m/s et 20 m/s, plus préférentiellement encore entre 1,5 m/s et 10 m/s, et encore plus préférentiellement entre 3 m/s et 10 m/s.

On peut faire varier la vitesse dans la phase diluée de la zone de séparation 140, notamment aller au-delà de 10 m/s, voire de 20 m/s, pour ajuster le temps de séjour des particules. Cependant, on veillera à ne pas dépasser des vitesses de 50 m/s et préférentiellement des vitesses de 35 m/s, pour ne pas nuire à l'intégrité des matériaux constitutifs de la zone de séparation 541, tels que des réfractaires, ou pour ne pas favoriser de façon trop importante l'attrition des

particules de solides mises en oeuvre dans le lit fluidisé du réacteur de combustion 510.

La vitesse superficielle de gaz contrôlée dans la phase diluée de la zone de séparation 541 permet la séparation par élutriation des deux types de particules solides du mélange, avec comme effet, d'une part le transport des particules dont la vitesse terminale de chute est sensiblement plus faible que la vitesse superficielle du gaz, c'est-à-dire la masse active oxydo-réductrice, les imbrûlés solides, les cendres volantes, et d'autre part la chute gravitaire des cendres de foyer agglomérées dans la partie inférieure de la zone de séparation 541. Les cendres de foyer agglomérées sont récupérées au bas de la partie inférieure de la zone de séparation 541 au moyen d'une évacuation. De préférence, le dispositif d'évacuation des cendres de foyer agglomérées comprend de moyens de contrôle du flux de solide permettant en premier lieu d'assurer l'étanchéité avec l'atmosphère extérieure de l'unité, et en deuxième lieu d'assurer une régulation précise du flux de solide. Un tel dispositif d'évacuation peut comprendre par exemple une garde liquide, un bac de récupération, une écluse rotative, un sas ou une simple vanne mécanique pouvant s'ouvrir de façon intermittente (non représentés). L'évacuation, qui peut être par exemple un des dispositifs cités, est choisie de manière à ne pas nuire au fonctionnement nominal de l'unité. Les cendres de foyer agglomérées sont ensuite sorties de l'unité CLC par une conduite (non représentée) qui n'a pas de limite d'angle et peut aller de l'horizontale à la verticale descendante. Les particules de masse active oxydo-réductrices transportées dans la phase diluée de la zone de séparation 541 par le gaz de fluidisation 505 sont alors envoyées dans la partie supérieure 542 de la zone de transport 540, pour être ensuite réintroduites dans le réacteur de combustion 510. L'essentiel de la masse active extrait par la conduite d'extraction simultanément aux cendres de foyer est en effet redirigé vers la zone de combustion. De préférence, plus de 70% en masse des particules de la masse active oxydo-réductrice est recyclé dans le flux extrait par la conduite d'extraction, plus préférentiellement plus de 80%, et encore plus préférentiellement plus de 90%.

La séparation réalisée permet donc l'élimination des cendres de foyer agglomérées, dont l'accumulation peut encrasser le réacteur de combustion et nuire au bon fonctionnement de l'unité CLC, tout en permettant le recyclage interne de la masse active oxydo-réductrice, limitant ainsi les appoints d'inventaire (la masse active oxydo-réductrice) dans le procédé.

Dans ce mode de réalisation, on contrôle à la fois la température du premier gaz de fluidisation 506 pour fluidiser la charge hydrocarbonée, et la température du deuxième gaz de fluidisation 505, afin que la température dans la zone de transport soit à inférieure ou égale à 500 °C, de préférence inférieure ou égale à 450 °C, plus préférentiellement inférieure ou égale à 400 °C, et plus préférentiellement encore inférieure ou égale à 300 °C.

Le diamètre, ou diamètre équivalent, de la partie inférieure 541 de la zone de transport 540 (zone de séparation) et le diamètre de la partie supérieure 542 de la zone de transport 540 peuvent être différents en fonction des contraintes de mise en oeuvre du procédé telles que les débits de gaz à appliquer pour fluidiser les particules de solides et l'impact de ces gaz sur le procédé, ou encore les quantités de cendres de foyer agglomérées à éliminer ou de charge hydrocarbonée à injecter.

Une vanne de fond 550, facultative, n'a pas vocation à être fermée mais vise à pouvoir disposer si besoin d'un moyen mécanique pour isoler les parties 541 et 542 de la zone de transport 540.

## Exemples

### *Exemple 1*

On se place dans la configuration décrite en relation avec la figure 5.

Le lit fluidisé du réacteur de combustion 510 est un lit fluidisé de combustion de charbon d'une puissance de 2MWth. Il est alimenté par 0,078 kg/s de charbon Sud-Africain dont les caractéristiques sont regroupées dans le tableau 2.

Tableau 2 : Composition et caractérisation de la charge charbon

| | | |
|---|---|---|
| C | %pds | 70,00 |
| H | %pds | 4,14 |
| O | %pds | 9,32 |
| N | %pds | 1,84 |
| S | %pds | 0,80 |
| Cendres | %pds | 13,90 |
| % matières volatiles | % | 29,90 |
| % Carbone fixe | % | 56,20 |

(suite)

| | | |
|---|---|---|
| | | |
| % humidité | % | 4,00 |
| | | |
| PCI séchage ultime | kJ/kg | 26,843 |
| PCI séchage air | kJ/kg | 25,769 |
| Débit charbon brut | kg/s | 0,078 |

Le réacteur de combustion est opéré en mode CLC à 950 °C en lit fluidisé. Le lit fluidisé est alimenté par 5,11 kg/s de masse active oxydo-réductrice par l'alimentation 502. Le lit est fluidisé par 0,04 $Nm^3/s$ de vapeur d'eau 503.

Un mélange comprenant des cendres de foyer agglomérées et des particules de la masse active est extrait du réacteur 510 par la conduite d'extraction 520 selon un débit de 0,5 kg/s. Le solide extrait en fond de réacteur est plus concentré en cendres de foyer agglomérées. Le mélange de solides extrait est composé à 80% de masse active oxydo-réductrice et à 20% de cendres de foyer agglomérées. Les particules de la masse active oxydo-réductrice ont une granulométrie comprise à 95 % dans la gamme 150 $\mu$m - 300 $\mu$m et ont une masse volumique de 4190 $kg/m^3$. Les cendres de foyer agglomérées ont un diamètre de particule supérieur à 750 $\mu$m et une masse volumique d'au moins 2600 $kg/m^3$. C'est sur le cas limite 750 $\mu$m et 2600 $kg/m^3$ que se base l'exemple.

Les vitesses terminales de chute respectives sont :

- pour les cendres de foyer agglomérées : 5,71 m/s
- pour les particules d'oxydes : 1,15 m/s

On se place dans un système où la vitesse du gaz est ajustée à 3 m/s dans la phase diluée de la zone de séparation 541, dont le diamètre est de 0,1 m, par le gaz de fluidisation 505. Dans ces conditions 95 % des particules de la masse active oxydo-réductrice et 0,1 % des cendres de foyer agglomérées sont entrainées vers la partie supérieure de la zone de transport, en direction du réacteur de combustion, soit 0,38 kg/s de porteur d'oxygène et 0,1 g/s de cendres de foyer agglomérées. Cela implique que 99,9 % des cendres de foyer agglomérées et 5 % des particules d'oxyde métallique tombent au fond de la zone de séparation 541 et sont évacuées hors de l'unité CLC, soit 0,02 kg/s de masse active et 99,9 g/s de solides agglomérés.

La fluidisation de la conduite 541 se fait grâce à de la vapeur basse pression à 150 °C à 0,46 mol/s. Lorsque ce flux de gaz rencontre le flux de solide issu des moyens de contrôle du débit du mélange 130 à 950°C, il en résulte une température de mélange gaz/solide de 919 °C.

La partie basse de la conduite 542 est fluidisée par de la vapeur basse pression 206 à 150°C pour un flux à 0,745 mol/s. Cette vapeur 506 se mélange au flux de gaz et de solide issu de la zone de séparation 541. Il en résulte un nouveau mélange gaz/solide à 467 °C. La charge issue du dispositif d'injection 560 est amenée au rythme de 0.078 kg/s et à une température de 15 °C. Cette charge hydrocarbonée se mélange au flux gaz-solide ascendant dans la conduite 542. Avec le réchauffage de la charge et la vaporisation de l'humidité intrinsèque il résulte une nouvelle température de mélange gaz/solide de 298 °C dans la zone de transport 542.

En admettant que la zone de transport 542 a le même diamètre que le diamètre de la conduite 541, à savoir 0,1 m, il résulte une vitesse superficielle du gaz dans cette zone de 8,2 m/s. Cette vitesse est bien supérieure à la vitesse terminale de chute des particules de charbon qui est de 0,23 m/s (pour un diamètre moyen de 100 $\mu$m et une masse volumique de 1500 $kg/m^3$).

***Exemple 2***

L'exemple 2 est un exemple comparatif, correspondant à une mise en oeuvre du procédé CLC selon l'art antérieur. On considère dans cet exemple la même configuration que dans l'exemple 1 en ce qui concerne les équipements 510, 503, 530. Cependant, dans cette exemple, il n'y a pas de mise en oeuvre de l'élimination des cendres selon l'invention et la conduite d'extraction 520 ne débouche pas sur une zone de séparation mais directement vers l'extérieur.

Le mélange de solide extrait de l'unité à raison de 0,5 kg/s a une composition de 20% de cendres de foyer agglomérées tels que définis dans l'exemple 1 et de 80 % de masse active oxydo-réductrice tels que définis dans l'exemple 1.

Le tableau 3 regroupe les données sur les flux extraits de la conduite 520 et extraits de l'unité CLC (fond de 140) pour les exemples 1 et 2.

Tableau 3 : Comparatif des intrants/extrants des exemples 1 et 2

| | Ex1 (120) | Ex2 (120) | Ex1 (fond de 140) | Ex2 (fond de 140) |
|---|---|---|---|---|
| flux (kg/s) | 0,5 | 0,5 | 0,120 | 0,5 |
| % cendres de foyer agglomérées | 20 | 20 | 83 | 20 |
| % masse active | 80 | 80 | 17 | 80 |

Les sorties de masse active oxydo-réductrice doivent être compensées par un appoint pour maintenir l'inventaire de l'unité. Cet appoint est de 1,73 tonnes par jour pour l'exemple 1 et de 34,6 tonnes par jour pour l'exemple 2 pour une quantité de cendres de foyer agglomérées éliminées sensiblement équivalente de 8,63 tonnes par jour pour l'exemple 1 et de 8,64 tonnes par jour pour l'exemple 2. Cette comparaison illustre bien la capacité du procédé et de l'installation selon l'invention à limiter la perte de masse active lors de l'élimination des cendres de foyer agglomérées du réacteur de combustion.

**Revendications**

**1.** Procédé de combustion d'une charge hydrocarbonée solide par oxydo-réduction en boucle chimique dans laquelle circule une masse active oxydo-réductrice sous forme de particules, dans lequel:

- on introduit la charge hydrocarbonée solide sous forme de particules dans une zone de transport (140,240,340,440,540) opérant en lit fluidisé et débouchant dans un réacteur de combustion (110,210,310,410,510) ;
- on injecte dans ladite zone de transport (140,240,340,440,540) un premier gaz de fluidisation (106,206,306,406,506) de manière à créer une phase diluée du lit fluidisé, en contrôlant le débit dudit gaz (106,206,306,406,506) tel que la vitesse superficielle du gaz dans la zone de transport (140,240,340,440,540) soit supérieure à la vitesse terminale de chute des particules de la charge hydrocarbonée solide et à la vitesse terminale de chute de particules solides situées dans le réacteur de combustion (110,210,310,410,510), et en contrôlant la température dudit premier gaz tel que la température dans la phase diluée de la zone de transport soit inférieure ou égale à 500 °C ;
- on effectue la combustion de la charge hydrocarbonée solide issue de la zone de transport (140,240,340,440,540) par mise en contact avec la masse active oxydo-réductrice au sein du réacteur de combustion opérant en lit fluidisé.

**2.** Procédé selon la revendication 1, dans lequel la vitesse superficielle du gaz dans la phase diluée de la zone de transport (140,240,340,440,540) est comprise entre 2 m/s et 50 m/s.

**3.** Procédé selon l'une des revendications 1 et 2, dans lequel on introduit la charge hydrocarbonée solide sous forme de particules dans la zone de transport (140) par écoulement gravitaire au moyen d'une conduite à écoulement gravitaire (170), et on régule l'écoulement de la charge hydrocarbonée solide à l'aide de moyens de régulation et d'étanchéité (180) situés entre ladite conduite à écoulement gravitaire (170) et une zone tampon (190) pour le stockage temporaire de la charge hydrocarbonée solide sous forme de particules.

**4.** Procédé selon l'une des revendications 1 et 2, dans lequel on introduit la charge hydrocarbonée solide sous forme de particules dans la zone de transport (240) au moyen d'une vis sans fin (270), ladite vis sans fin (270) étant alimentée par un écoulement gravitaire de la charge solide (281) en provenance d'une zone tampon (290) pour le stockage temporaire de la charge hydrocarbonée solide sous forme de particules (290), et on régule l'écoulement de la charge hydrocarbonée solide à l'aide de moyens de régulation et d'étanchéité (280) situés entre ladite vis sans fin (270) et la zone tampon (290).

**5.** Procédé selon l'une des revendications 1 et 2, dans lequel on introduit la charge hydrocarbonée solide sous forme de particules dans la zone de transport (340) au moyen d'une ligne de transport pneumatique dense (370), ladite ligne de transport pneumatique dense (370) étant alimentée par un écoulement gravitaire de la charge solide (381) en provenance d'une zone tampon (390) pour le stockage temporaire de la charge hydrocarbonée solide sous forme de particules et par un gaz vecteur (307), et on régule l'écoulement de la charge hydrocarbonée solide à l'aide de

moyens de régulation et d'étanchéité (380) situés entre ladite ligne de transport pneumatique dense (370) et la zone tampon (390).

**6.** Procédé selon l'une des revendications 1 et 2, dans lequel on envoie une charge une charge hydrocarbonée solide brute depuis une zone de stockage (492) vers un broyeur (470) pour former la charge hydrocarbonée sous forme de particules, le débit de ladite charge hydrocarbonée solide brute étant régulé par des moyens de régulation et d'étanchéité (480) situés entre le broyeur (470) et la zone de stockage (492), puis on introduit la charge hydrocarbonée sous forme de particules dans la zone de transport (470) au moyen d'une conduite (482) alimentée par le broyeur dans lequel on envoie un gaz vecteur (408) pour transporter la charge vers la conduite (482).

**7.** Procédé selon l'une des revendications précédentes, dans lequel :

- on extrait du réacteur de combustion un mélange comprenant des particules de ladite masse active oxydo-réductrice et des cendres de foyer par une conduite d'extraction (520) située en fond du réacteur de combustion ;
- on introduit ledit mélange selon un débit contrôlé dans une zone de séparation constituée par une partie inférieure (541) de la zone de transport (540), située sous une partie supérieure (542) de la zone de transport (540) dans laquelle la charge hydrocarbonée solide est introduite ;
- on injecte un deuxième gaz de fluidisation (505) dans la zone de séparation, ladite injection se faisant en contrôlant le débit dudit deuxième gaz de fluidisation (505) de manière à :

    ◦ séparer par élutriation les particules de la masse active oxydo-réductrice et les cendres de foyer agglomérées au sein dudit mélange, lesdites particules de la masse active oxydo-réductrice étant alors transportées vers le réacteur de combustion (510) et les cendres de foyer agglomérées tombant sous l'effet de la gravité au fond de la zone de séparation d'où elles sont évacuées; et
    ◦ à ce que la vitesse du gaz issu du mélange du gaz de fluidisation (506) et du deuxième gaz de fluidisation (505) dans la partie supérieure (542) de la zone de transport (540) soit supérieure à la vitesse terminale de chute des particules de la charge hydrocarbonée solide et à la vitesse terminale de chute de particules solides situées dans le réacteur de combustion (510);

et ladite injection se faisant également en contrôlant la température dudit deuxième gaz (506) tel que la température de la zone de transport (540) soit inférieure ou égale à 500 °C.

**8.** Procédé selon l'une des revendications précédentes, dans lequel la zone de transport (140,240,340,440,540) est une conduite sensiblement verticale.

**9.** Procédé selon l'une des revendications précédentes, dans lequel la masse active oxydo-réductrice réduite dans le réacteur de combustion (110,210,310,410,510) est réoxydée dans un réacteur d'oxydation, avant d'être à nouveau mise en contact avec la charge hydrocarbonée solide dans le réacteur de combustion (110,210,310,410,510).

**10.** Procédé selon l'une des revendications précédentes, dans lequel la charge hydrocarbonée solide est choisie parmi le charbon, le coke, le pet-coke, la biomasse, les sables bitumineux et les déchets ménagers, agricoles ou industriels.

**11.** Installation de combustion d'une charge hydrocarbonée solide par oxydo-réduction en boucle chimique pour mettre en oeuvre le procédé selon l'une des revendications 1 à 10, comprenant un réacteur de combustion (110,210,310,410,510) et un réacteur d'oxydation, ledit réacteur de combustion comprenant :

- une alimentation en masse active oxydo-réductrice sous forme de particules (102,202,302,402,502) en provenance du réacteur d'oxydation ;
- une alimentation en un troisième gaz de fluidisation (103,203,303,403,503) ; et
- une alimentation en une charge hydrocarbonée solide sous forme de particules, ladite alimentation en une charge hydrocarbonée solide comprenant:

    ◦ une zone de transport opérant en lit fluidisé (140,240,340,440,540), pour transporter la charge hydrocarbonée solide vers le réacteur de combustion (110,210,310,410,510), ladite zone de transport ayant une température inférieure ou égale à 500 °C;
    odes moyens d'injection de la charge hydrocarbonée solide sous forme de particules dans ladite zone de transport (140,240,340,440,540) ; et
    o des moyens d'injection d'un premier gaz de fluidisation (106,206,304,406,506) dans ladite une zone de

transport (140,240,340,440,540),

et ledit réacteur d'oxydation comprenant :

- une alimentation en particules de masse active oxydo-réductrice réduite dans le réacteur de combustion (110,210,310,410,510),
- une alimentation en un gaz oxydant,
- une évacuation pour le gaz oxydant réduit suite à l'oxydation de la masse active oxydo-réductrice, et
- une évacuation pour les particules de la masse active oxydo-réductrice réoxydée vers le réacteur de combustion (110,210,310,410,510).

**12.** Installation de combustion selon la revendication 11, dans laquelle lesdits moyens d'injection de la charge hydrocarbonée solide dans ladite zone de transport (140) comprennent une conduite à écoulement gravitaire (170) débouchant dans la zone de transport, ladite conduite étant alimentée par une zone tampon (190) via des moyens de régulation et d'étanchéité (180) permettant de réguler l'écoulement de la charge solide.

**13.** Installation de combustion selon la revendication 11, dans laquelle lesdits moyens d'injection de la charge hydrocarbonée solide dans ladite zone de transport comprennent une vis sans fin (270) débouchant dans la zone de transport (240), ladite vis sans fin étant alimentée par une zone tampon (290) via des moyens de régulation et d'étanchéité (280) permettant de réguler l'écoulement de la charge solide.

**14.** Installation de combustion selon la revendication 11, dans laquelle lesdits moyens d'injection de la charge hydrocarbonée solide dans la zone de transport (340) comprennent une ligne de transport pneumatique dense (370) débouchant dans la zone de transport (340), ladite ligne de transport (370) comprenant des moyens d'injection d'un gaz vecteur (307) pour transporter les particules de la charge hydrocarbonée solide s'écoulant depuis une zone tampon (390) vers la zone de transport (370), l'écoulement des particules de la charge hydrocarbonée solide depuis la zone tampon (390) jusqu'à la ligne de transport (370) étant régulé par des moyens de régulation et d'étanchéité (380).

**15.** Installation de combustion selon la revendication 11, dans laquelle lesdits moyens d'injection de la charge hydrocarbonée solide dans la zone de transport (440) comprennent :

- une zone de stockage (492) d'une charge hydrocarbonée solide brute;
- un broyeur (470) pour broyer la charge hydrocarbonée solide brute issue de la zone de stockage (492) sous forme de particules aptes à être fluidisées dans la zone de transport (440), ledit broyeur comprenant des moyens d'injection d'un gaz vecteur (308);
- une conduite recevant un mélange du gaz vecteur et des particules de la charge hydrocarbonée solide provenant du broyeur (470), et débouchant dans la zone de transport (440).

**16.** Installation de combustion selon l'une des revendications 11 à 15, comprenant en outre un dispositif d'élimination de cendres de foyer agglomérées comprenant :

- une conduite d'extraction (520) d'un mélange comprenant des particules de la masse active oxydo-réductrice et des cendres de foyer agglomérées contenues dans le réacteur de combustion, ladite conduite d'extraction (520) étant positionnée en fond dudit réacteur ;
- une zone de séparation constituée par une partie inférieure (541) de la zone de transport (540), pour séparer par élutriation les particules dudit mélange provenant de la conduite d'extraction (520), ladite zone de séparation comprenant :

  - une alimentation en ledit mélange provenant de la conduite d'extraction (520), ladite alimentation comprenant des moyens de contrôle du débit du mélange (530) introduit dans la zone de séparation ;
  - des moyens d'injection d'un deuxième gaz de fluidisation (502);
  - une zone en phase diluée du lit fluidisé en partie supérieure de la zone de séparation ; et

- une évacuation pour les cendres de foyer agglomérées située en partie inférieure de la zone de séparation.

## Patentansprüche

1. Verfahren zur Verbrennung einer festen Kohlenwasserstoffbeschickung durch Reduktionsoxidation im Chemical Looping, in dem eine aktive Redoxmasse in Form von Partikeln zirkuliert, wobei:

   - die feste Kohlenwasserstoffbeschickung in Form von Partikeln in einen Transportbereich (140, 240, 340, 440, 540) eingeführt wird, der in Wirbelschicht arbeitet und in einen Verbrennungsreaktor (110, 210, 310, 410, 510) mündet;
   - in den Transportbereich (140, 240, 340, 440, 540) ein erstes Fluidisierungsgas (106, 206, 306, 406, 506) derart eingespritzt wird, um eine verdünnte Phase der Wirbelschicht zu erzeugen, indem der Durchsatz des Gases (106, 206, 306, 406, 506) derart gesteuert wird, dass die Oberflächengasgeschwindigkeit in dem Transportbereich (140, 240, 340, 440, 540) größer als die Endfallgeschwindigkeit der Teilchen der festen Kohlenwasserstoffbeschickung und die Endfallgeschwindigkeit von festen Teilchen ist, die sich in dem Verbrennungsreaktor (110, 210, 310, 410, 510) befinden, und indem die Temperatur des ersten Gases derart gesteuert wird, dass die Temperatur in der verdünnten Phase des Transportbereichs niedriger als oder gleich 500 °C ist;
   - die Verbrennung der festen Kohlenwasserstoffbeschickung, die aus dem Transportbereich (140, 240, 340, 440, 540) stammt, durch in Kontakt bringen mit der aktiven Redoxmasse in dem Verbrennungsreaktor, der in Wirbelschichtarbeitet, durchgeführt wird.

2. Verfahren nach Anspruch 1, wobei die Oberflächengasgeschwindigkeit in der verdünnten Phase des Transportbereichs (140, 240, 340, 440, 540) zwischen 2 m/s et 50 m/s beträgt.

3. Verfahren nach einem der Ansprüche 1 und 2, wobei die feste Kohlenwasserstoffbeschickung in Form von Partikeln in den Transportbereich (140) durch Schwerkraftströmung mittels einer Leitung zur Schwerkraftströmung (170) eingeführt wird, und die Strömung der festen Kohlenwasserstoffbeschickung mit Hilfe von Regulierungs- und Dichtungsmitteln (180) reguliert wird, die zwischen der Leitung zur Schwerkraftströmung (170) und einem Pufferbereich (190) für die temporäre Speicherung der festen Kohlenwasserstoffbeschickung in Form von Partikeln angeordnet sind.

4. Verfahren nach einem der Ansprüche 1 und 2, wobei die feste Kohlenwasserstoffbeschickung in Form von Partikeln in den Transportbereich (240) mit Hilfe von einer Förderschnecke (270) eingeführt wird, wobei die Förderschnecke (270) durch eine Schwerkraftströmung der festen Beschickung (281) gespeist wird, die von einem Pufferbereich (290) für die temporäre Speicherung der festen Kohlenwasserstoffbeschickung in Form von Partikeln (290) kommt, und die Strömung der festen Kohlenwasserstoffbeschickung mit Hilfe von RegulierungsundDichtungsmitteln (280) reguliert wird, die zwischen der Förderschnecke (270) und dem Pufferbereich (290) angeordnet sind.

5. Verfahren nach einem der Ansprüche 1 und 2, wobei die feste Kohlenwasserstoffbeschickung in Form von Partikeln in den Transportbereich (340) mit Hilfe von einer pneumatischen Dichtstrom-Förderleitung (370) eingeführt wird, wobei die pneumatische Dichtstrom-Förderleitung (370) durch eine Schwerkraftströmung der festen Beschickung (381), die von einem Pufferbereich (390) für die temporäre Speicherung der festen Kohlenwasserstoffbeschickung in Form von Partikeln kommt, und durch ein Trägergas (307) gespeist wird, und die Strömung der festen Kohlenwasserstoffbeschickung mit Hilfe von Regulierungs- und Dichtungsmitteln (380) reguliert wird, die zwischen der pneumatischen Dichtstrom-Förderleitung (370) und dem Pufferbereich (390) angeordnet sind.

6. Verfahren nach einem der Ansprüche 1 und 2, wobei eine feste Kohlenwasserstoffrohbeschickung von einem Speicherbereich (492) zu einem Zerkleinerer (470) geschickt wird, um die Kohlenwasserstoffbeschickung in Form von Partikeln zu bilden, wobei der Durchsatz der festen Kohlenwasserstoffrohbeschickung durch Regulierungs- undDichtungsmitteln (480) reguliert wird, die zwischen dem Zerkleinerer (470) und dem Speicherbereich (492) angeordnet sind, und dann die Kohlenwasserstoffbeschickung in Form von Partikeln in den Transportbereich (470) mit Hilfe von einer Leitung (482) eingeführt wird, die von dem Zerkleinerer gespeist wird, in den ein Trägergas (408) geschickt wird, um die Beschickung bis zu der Leitung (482) zu transportieren.

7. Verfahren nach einem der vorhergehenden Ansprüche, wobei:

   - aus dem Verbrennungsreaktor eine Mischung, die Partikel der aktiven Redoxmasse und Grob- oder Rostasche umfasst, durch eine Extraktionsleitung (520), die am Boden des Verbrennungsreaktors angeordnet ist,extrahiert wird;
   - die Mischung mit einem geregelten Durchsatz in einen Trennbereich eingeführt wird, der aus einem unteren

Teil (541) des Transportbereichs (540) gebildet ist, der unter einem oberen Teil (542) des Transportbereichs (540) angeordnet ist, in den die feste Kohlenwasserstoffbeschickung eingeführt wird;
- ein zweites Fluidisierungsgas (505) in den Trennbereich eingespritzt wird, wobei das Einspritzen erfolgt, indem der Durchsatz des zweiten Fluidisierungsgas (505) derart gesteuert wird, um:

◦ durch Schlämmen die Partikel der aktiven Redoxmasse und die Grob- oder Rostasche zu trennen, die in der Mischung agglomeriert werden, wobei die Partikel der aktiven Redoxmasse dann zu dem Verbrennungsreaktor (510) transportiert werden und die agglomerierte Grob- oder Rostasche unter der Wirkung der Schwerkraft auf den Boden des Trennbereichs fällt, wo sie abgeführt wird, und
◦ dass die Geschwindigkeit des Gases, das aus der Mischung des Fluidisierungsgases (506) und des zweiten Fluidisierungsgas (505) in dem oberen Teil (542) des Transportbereichs (540) hervorgegangen ist, größer als die Endfallgeschwindigkeit der Teilchen der festen Kohlenwasserstoffbeschickung und die Endfallgeschwindigkeit von festen Teilchen ist, die sich in dem Verbrennungsreaktor (510) befinden,

und wobei das Einspritzen ebenfalls erfolgt, indem die Temperatur des zweiten Gases (506) derart gesteuert wird, dass die Temperatur des Transportbereichs (540) niedriger als oder gleich 500 °C ist.

**8.** Verfahren nach einem der vorhergehenden Ansprüche, wobei der Transportbereich (140, 240, 340, 440, 540) eine im Wesentlichen vertikale Leitung ist.

**9.** Verfahren nach einem der vorhergehenden Ansprüche, wobei die aktive Redoxmasse, die in dem Verbrennungsreaktor (110, 210, 310, 410, 510) reduziert wird, in einem Oxidationsreaktor reoxidiert wird, bevor sie wieder mit der festen Kohlenwasserstoffbeschickung in dem Verbrennungsreaktor (110, 210, 310, 410, 510) in Kontakt gebracht wird.

**10.** Verfahren nach einem der vorhergehenden Ansprüche, wobei die feste Kohlenwasserstoffbeschickung ausgewählt wird aus Kohle, Koks, Erdölkoks, Biomasse, Teersand und Haushalts-, Landwirtschafts- und Industrieabfällen.

**11.** Anlage zur Verbrennung einer festen Kohlenwasserstoffbeschickung durch Reduktionsoxidation im Chemical Looping, um das Verfahren nach einem der Ansprüche 1 bis 10 umzusetzen, umfassend einen Verbrennungsreaktor (110, 210, 310, 410, 510) und einen Oxidationsreaktor, wobei der Verbrennungsreaktor Folgendes aufweist:

- eine Zufuhr von aktiver Redoxmasse in Form von Partikeln (102, 202, 302, 402, 502) aus dem Oxidationsreaktor;
- eine Zufuhr von einem drittenFluidisierungsgas (103, 203, 303, 403, 503) und
- eine Zufuhr von einer festen Kohlenwasserstoffbeschickung in Form von Partikeln, wobei die Zufuhr von einer festen Kohlenwasserstoffbeschickung Folgendes aufweist:

◦ einen Transportbereich, der in Wirbelschicht arbeitet (140, 240, 340, 440, 540), um die feste Kohlenwasserstoffbeschickung zu dem Verbrennungsreaktor (110, 210, 310, 410, 510) zu transportieren, wobei der Transportbereich eine Temperatur von weniger als oder gleich 500 °C aufweist;
◦ Mittel zum Einspritzen der festen Kohlenwasserstoffbeschickung in Form von Partikeln in den Transportbereich (140, 240, 340, 440, 540) und
◦ Mittel zum Einspritzen eines ersten Fluidisierungsgases (106, 206, 306, 406, 506)in den einen Transportbereich (140, 240, 340, 440, 540),

und wobei der Oxidationsreaktor Folgendes aufweist:

- eine Zufuhr von Partikeln einer aktiven Redoxmasse, die in dem Verbrennungsreaktor (110, 210, 310, 410, 510) reduziert wird,
- eine Zufuhr von einem Oxidationsgas,
- eine Abfuhr für das Oxidationsgas, das infolge der Oxidation der aktiven Redoxmasse reduziert wird, und
- eine Abfuhr für die Partikel der reoxidierten aktiven Redoxmasse zu dem Verbrennungsreaktor (110, 210, 310, 410, 510).

**12.** Anlage zur Verbrennung nach Anspruch 11, wobei die Mittel zum Einspritzen der festen Kohlenwasserstoffbeschickung in den Transportbereich (140) eine Leitung zur Schwerkraftströmung (170) aufweisen, die in den Transportbereich mündet, wobei die Leitung durch einen Pufferbereich (190) über RegulierungsundDichtungsmitteln (180)

gespeist wird, die ermöglichen, die Strömung der festen Kohlenwasserstoffbeschickung zu regulieren.

**13.** Anlage zur Verbrennung nach Anspruch 11, wobei die Mittel zum Einspritzen der festen Kohlenwasserstoffbeschickung in den Transportbereich eine Förderschnecke (270) aufweisen, die in den Transportbereich (240) mündet, wobei die Förderschnecke durch einen Pufferbereich (290) über Regulierungs- und Dichtungsmittel (280) gespeist wird, die ermöglichen, die Strömung der festen Beschickung zu regulieren.

**14.** Anlage zur Verbrennung nach Anspruch 11, wobei die Mittel zum Einspritzen der festen Kohlenwasserstoffbeschickung in den Transportbereich (340) eine pneumatische Dichtstrom-Förderleitung (370) aufweisen, die in den Transportbereich (340) mündet, wobei die Förderleitung (370) Mittel zum Einspritzen eines Trägergases (307) aufweist, um die Partikel der festen Kohlenwasserstoffbeschickung zu transportieren, die von einem Pufferbereich (390) zu dem Transportbereich (370) strömen, wobei das Strömen der Partikel der festen Kohlenwasserstoffbeschickung von dem Pufferbereich (390) bis zu der Förderleitung (370) durch Regulierungs- und Dichtungsmittel (380) reguliert wird.

**15.** Anlage zur Verbrennung nach Anspruch 11, wobei die Mittel zum Einspritzen der festen Kohlenwasserstoffbeschickung in den Transportbereich (440) Folgendes aufweisen:

- einen Speicherbereich (492) einer festen Kohlenwasserstoffrohbeschickung;
- einen Zerkleinerer (470), um die feste Kohlenwasserstoffrohbeschickung, die aus dem Speicherbereich (492) stammt, in Form von Partikeln zu zerkleinern, die geeignet sind, in dem Transportbereich (440) fluidisiert zu werden, wobei der Zerkleinerer Mittel zum Einspritzen eines Trägergases (308) aufweist;
- eine Leitung, die eine Mischung des Trägergases und der Partikelder festen Kohlenwasserstoffbeschickung, die von dem Zerkleinerer (470) kommen, aufnimmt und in den Transportbereich (440) mündet.

**16.** Anlage zur Verbrennung nach einem der Ansprüche 11 bis 15, ferner umfassend eine Vorrichtung zum Beseitigen der agglomerierten Grob- oder Rostasche, umfassend:

- eine Extraktionsleitung (520) einer Mischung, umfassendPartikel der aktiven Redoxmasse und agglomerierte Grob- oder Rostasche, die in dem Verbrennungsreaktor enthalten ist, wobei die Extraktionsleitung (520) am Boden des Reaktors angeordnet ist;
- einen Trennbereich, der durch einen unteren Teil (541) des Transportbereichs (540) gebildet ist, um durch Schlämmen die Partikel der Mischung, die von der Extraktionsleitung (520) kommt, zu trennen, wobei der Trennbereich Folgendes aufweist:
- eine Zufuhr von der Mischung, die von der Extraktionsleitung (520) kommt, wobei die Zufuhr Mittel zum Regeln des Durchsatzes der Mischung (530), die in den Trennbereich eingeführt wird, aufweist;
- Mittel zum Einspritzen eines zweiten Fluidisierungsgases (502);
- einen Bereich in verdünnter Phase der Wirbelschicht im oberen Teil des Trennbereichs und
- eine Abfuhr für die agglomerierte Grob- oder Rostasche, die im unteren Teil des Trennbereichs angeordnet ist.

## Claims

**1.** A method for combustion of a solid hydrocarbon feed by oxidation-reduction in a chemical loop wherein a redox active mass circulates in particle form, comprising:

- feeding the solid hydrocarbon feed in particle form into a conveying zone (140, 240, 340, 440, 540) operating under fluidized bed conditions and opening into a combustion reactor (110, 210, 310, 410, 510),
- injecting into said conveying zone (140, 240, 340, 440, 540) a first fluidization gas (106, 206, 306, 406, 506) so as to create a dilute phase of the fluidized bed, while controlling the rate of flow of said gas (106, 206, 306, 406, 506) in such a way that the superficial velocity of the gas in conveying zone (140, 240, 340, 440, 540) is higher than the terminal velocity of the solid hydrocarbon feed particles and the terminal velocity of solid particles present in combustion reactor (110, 210, 310, 410, 510), and while controlling the temperature of said first gas in such a way that the temperature in the dilute phase of the conveying zone is less than or equal to 500°C,
- carrying out combustion of the solid hydrocarbon feed from conveying zone (140, 240, 340, 440, 540) through contact with the redox active mass within the fluidized-bed combustion reactor.

**2.** A method as claimed in claim 1, wherein the superficial gas velocity in the dilute phase of conveying zone (140,

240, 340, 440, 540) ranges between 2 m/s and 50 m/s.

**3.** A method as claimed in any one of claims 1 and 2, wherein the solid hydrocarbon feed in particle form is fed into conveying zone (140) through gravity flow by means of a gravity flow pipe (170), and the solid hydrocarbon feed flow is controlled through regulation and sealing means (180) arranged between said gravity flow pipe (170) and a buffer zone (190) for temporary storage of the solid hydrocarbon feed in particle form.

**4.** A method as claimed in any one of claims 1 and 2, wherein the solid hydrocarbon feed in particle form is fed into conveying zone (240) by means of an endless screw (270), said endless screw (270) being supplied by a gravity flow of solid feed (281) coming from a buffer zone (290) for temporary storage of the solid hydrocarbon feed in particle form, and the solid hydrocarbon feed flow is controlled through regulation and sealing means (280) arranged between said endless screw (270) and buffer zone (290).

**5.** A method as claimed in any one of claims 1 and 2, wherein the solid hydrocarbon feed in particle form is fed into conveying zone (340) by means of a dense pneumatic conveying line (370), said dense pneumatic conveying line (370) being supplied by a gravity flow of solid feed (381) coming from a buffer zone (390) for temporary storage of the solid hydrocarbon feed in particle form and by a carrier gas (307), and the solid hydrocarbon feed flow is controlled through regulation and sealing means (380) arranged between said dense pneumatic conveying line (370) and buffer zone (390).

**6.** A method as claimed in any one of claims 1 and 2, wherein a raw solid hydrocarbon feed is sent from a storage zone (492) to a mill (470) so as to shape the hydrocarbon feed in particle form, the flow of said raw solid hydrocarbon feed being controlled by regulation and sealing means (480) arranged between mill (470) and storage zone (492), then the hydrocarbon feed in particle form is fed into conveying zone (470) by means of a pipe (482) supplied from the mill into which a carrier gas (408) is sent for carrying the feed into pipe (482).

**7.** A method as claimed in any one of the previous claims, comprising:

- extracting from the combustion reactor a mixture comprising particles of said redox active mass and bottom ash through an extraction line (520) arranged in the bottom of the combustion reactor,
- feeding said mixture with a controlled flow rate into a separation zone consisting of a lower part (541) of conveying zone (540), arranged below an upper part (542) of conveying zone (540) into which the solid hydrocarbon feed is fed,
- injecting a second fluidization gas (505) into the separation zone, said injection being performed by controlling the flow rate of said second fluidization gas (505):
    - ◦ so as to separate by elutriation the redox active mass particles and the bottom ash agglomerated within said mixture, said redox active mass particles being then conveyed to combustion reactor (510) and the agglomerated bottom ash falling under the effect of gravity to the bottom of the separation zone where it is discharged, and
    - ◦ so that the velocity of the gas from the mixture of first fluidization gas (506) and second fluidization gas (505) in upper part (542) of conveying zone (540) is higher than the terminal velocity of the solid hydrocarbon feed particles and the terminal velocity of the solid particles present in combustion reactor (510),

and said injection is performed by controlling also the temperature of said second gas (505) in such a way that the temperature of conveying zone (540) is less than or equal to 500°C.

**8.** A method as claimed in any one of the previous claims, wherein conveying zone (140, 240, 340, 440, 540) is a substantially vertical pipe.

**9.** A method as claimed in any one of the previous claims, wherein the redox active mass reduced in combustion reactor (110, 210, 310, 410, 510) is reoxidized in an oxidation reactor prior to being again contacted with the solid hydrocarbon feed in combustion reactor (110, 210, 310, 410, 510).

**10.** A method as claimed in any one of the previous claims, wherein the solid hydrocarbon feed is selected from among coal, coke, pet coke, biomass, bituminous sands and household, agricultural or industrial waste.

**11.** A plant for chemical looping redox combustion of a solid hydrocarbon feed for implementing the method as claimed

in any one of claims 1 to 10, comprising a combustion reactor (110, 210, 310, 410, 510) and an oxidation reactor, said combustion reactor comprising:

- a supply means (102, 202, 302, 402, 502) for the redox active mass in particle form coming from the oxidation reactor,
- a third fluidization gas supply means (103, 203, 303, 403, 503), and
- a supply means for a solid hydrocarbon feedstock in particle form, said solid hydrocarbon feedstock supply means comprising:

    ◦ a conveying zone (140, 240, 340, 440, 540) operating under fluidized bed conditions for conveying the solid hydrocarbon feed to combustion reactor (110, 210, 310, 410, 510), said conveying zone having a temperature less than or equal to 500°C,
    ◦ means for injecting the solid hydrocarbon feed in particle form into said conveying zone (140, 240, 340, 440, 540), and
    ◦ means for injecting a first fluidization gas (106, 206, 306, 406, 506) into said conveying zone (140, 240, 340, 440, 540),

and said oxidation reactor comprising:

- a supply means for the redox active mass particles reduced in combustion reactor (110, 210, 310, 410, 510),
- an oxidizing gas supply means,
- a discharge means for the oxidizing gas reduced after oxidation of the redox active mass, and
- a discharge means for sending the reoxidized redox active mass particles to combustion reactor (110, 210, 310, 410, 510).

**12.** A combustion plant as claimed in claim 11, wherein said means for injecting the solid hydrocarbon feed into said conveying zone (140) comprise a gravity flow pipe (170) opening into the conveying zone, said pipe being supplied by a buffer zone (190) via regulation and sealing means (180) allowing the solid feed flow to be controlled.

**13.** A combustion plant as claimed in claim 11, wherein said means for injecting the solid hydrocarbon feed into said conveying zone comprise an endless screw (270) opening into conveying zone (240), said endless screw being supplied by a buffer zone (290) via regulation and sealing means (280) allowing the solid feed flow to be controlled.

**14.** A combustion plant as claimed in claim 11, wherein said means for injecting the solid hydrocarbon feed into conveying zone (340) comprise a dense pneumatic conveying line (370) opening into conveying zone (340), said conveying line (370) comprising means for injecting a carrier gas (307) intended to carry the solid hydrocarbon feed particles flowing from a buffer zone (390) to conveying zone (370), the flow of solid hydrocarbon feed particles from buffer zone (390) to conveying line (370) being controlled by regulation and sealing means (380).

**15.** A combustion plant as claimed in claim 11, wherein said means for injecting the solid hydrocarbon feed into conveying zone (440) comprise:

- a raw solid hydrocarbon feed storage zone (492),
- a mill (470) for crushing the raw solid hydrocarbon feed coming from storage zone (492) in the form of particles capable of being fluidized in conveying zone (440), said mill comprising carrier gas injection means (308),
- a pipe receiving a mixture of carrier gas and of solid hydrocarbon feed particles from mill (470), and opening into conveying zone (440).

**16.** A combustion plant as claimed in any one of claims 11 to 15, furthermore comprising a device for elimination of the agglomerated bottom ash comprising:

- a pipe (520) for extracting a mixture comprising redox active mass particles and agglomerated bottom ash contained in the combustion reactor, said extraction pipe (520) being positioned in the bottom of said reactor,
- a separation zone consisting of a lower part (541) of conveying zone (540), for separation by elutriation of the particles of said mixture coming from extraction pipe (520), said separation zone comprising:

    - a supply means for said mixture coming from extraction pipe (520), said supply means comprising means of controlling the flow rate of mixture (530) fed into the separation zone,

- means (502) for injecting a second fluidization gas,
- a dilute phase zone of the fluidized bed in the upper part of the separation zone, and
- an agglomerated bottom ash discharge means arranged in the lower part of the separation zone.

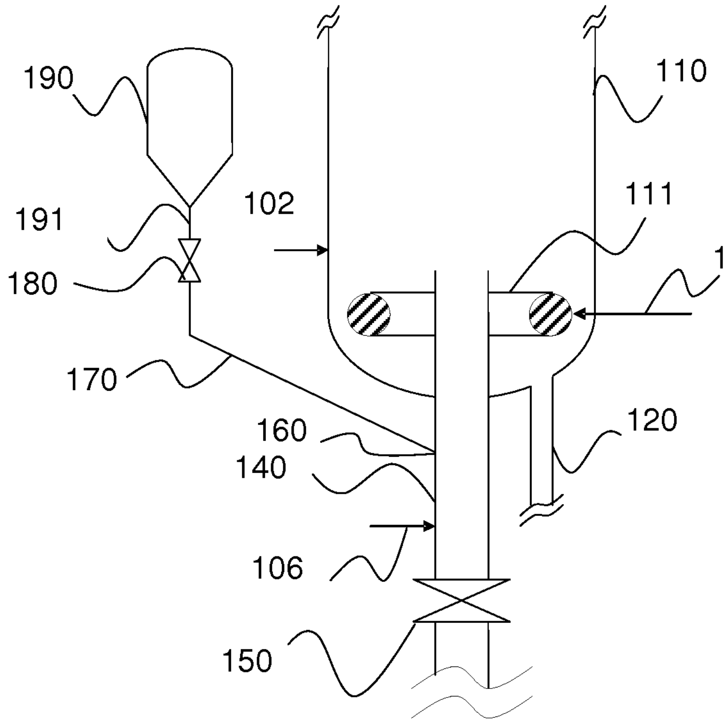
190
110
191
102
111
103
180
170
120
160
140
106
150

FIG. 1

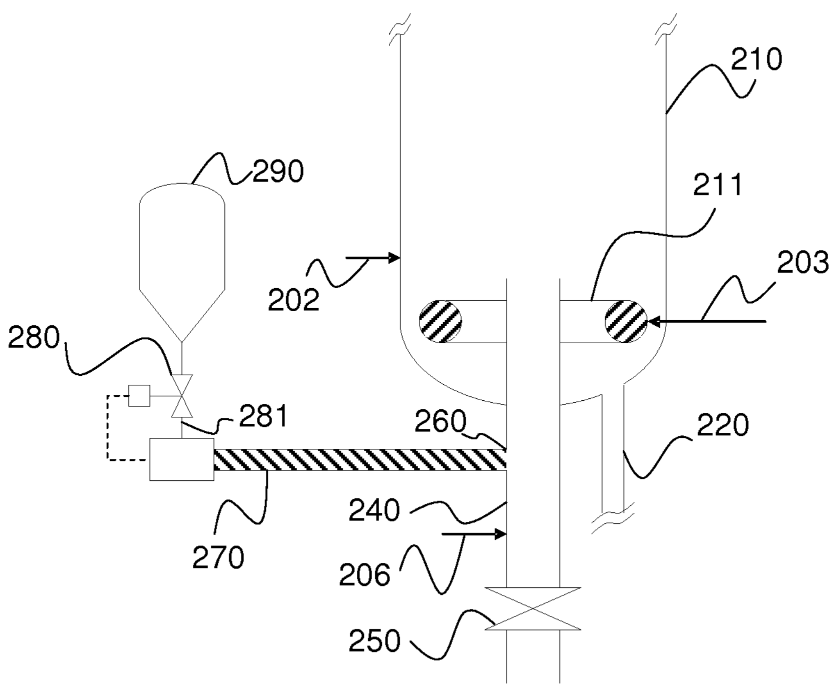
210
290
211
202
203
280
281
260
220
240
270
206
250

FIG. 2

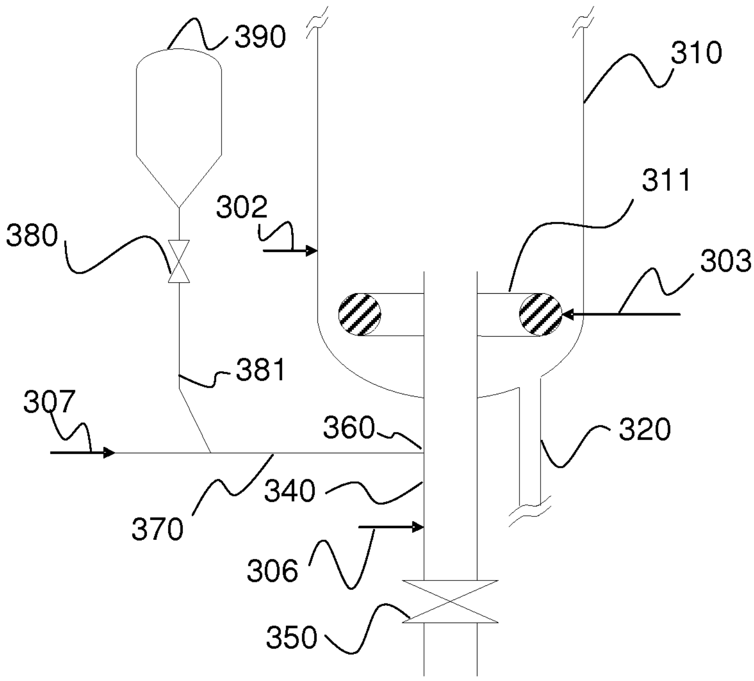
390
310
302
311
380
303
381
307
360
320
340
370
306
350

FIG. 3

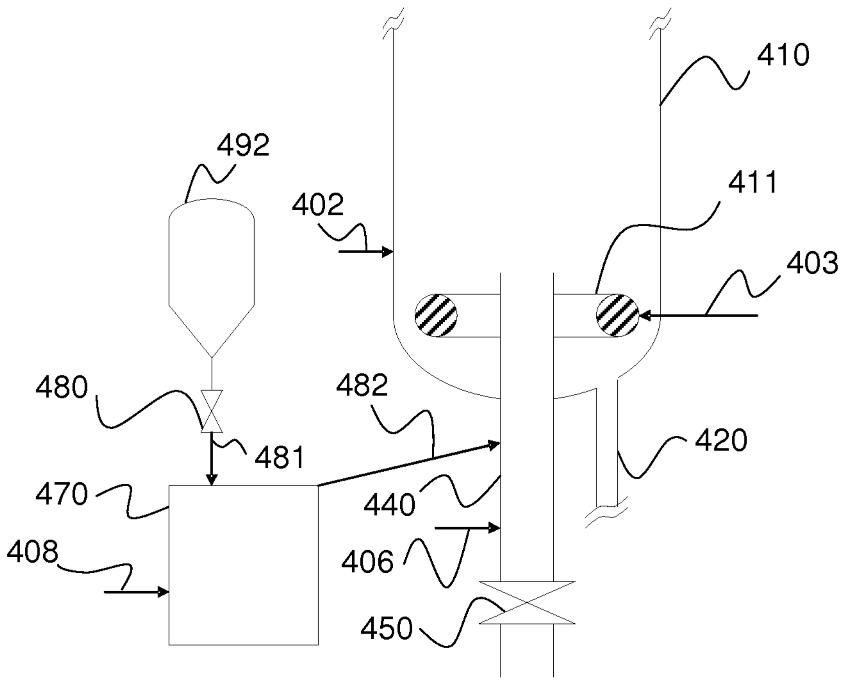
410
492
402
411
403
480
482
420
481
470
440
408
406
450

FIG. 4

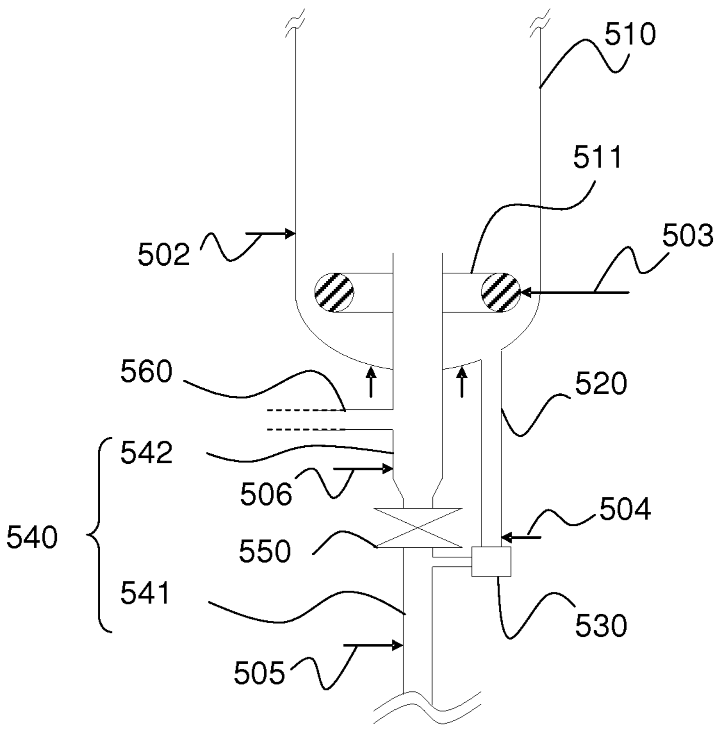


FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5447024 A
- FR 2850156
- FR 2960940
- FR 2960941
- FR 2980258